# EUROPÄISCHE PATENTSCHRIFT

(11) **EP 2 552 724 B1**
(45) Veröffentlichungstag und Bekanntmachung des Hinweises auf die Patenterteilung: **19.10.2016**
(21) Anmeldenummer: 11701235.1
(22) Anmeldetag: 19.01.2011
(51) Int. Cl.: B60K 15/05, B60L 11/18, H02K 5/10, H02K 7/06, H01R 13/639

(54) **STELLANTRIEB FÜR EIN KRAFTFAHRZEUG SOWIE VERRIEGELUNGSEINRICHTUNG NEBST VERFAHREN**
ACTUATOR FOR MOTOR VEHICLE
MÉCANISME D'ACTIONNEMENT POUR VÉHICULE AUTOMOBILE

(30) Priorität: 09.09.2010 DE 102010040522; 31.03.2010 DE 102010003545; 31.03.2010 DE 102010003523
(43) Veröffentlichungstag der Anmeldung: 06.02.2013
(73) Patentinhaber: Kiekert Aktiengesellschaft, 42579 Heiligenhaus (DE)
(72) Erfinder: BASAVARAJAPPA, Madhu S., 40470 Düsseldorf (DE); CAVALIE, Nicolas, 78560 LE PORT MARLY (FR); ERICES, Bernardo, 51429 Bergisch Galdbach (DE); KUNST, Frank, 59348 Lüdinghausen (DE)
(74) Vertreter: Gille Hrabal
(86) Internationale Anmeldenummer: PCT/EP2011/050702
(87) Internationale Veröffentlichungsnummer: WO 2011/120719

(56) Entgegenhaltungen:
- EP-A2- 0 195 548
- WO-A1-01/07738
- WO-A1-87/04213
- WO-A1-2009/143799
- DE-A1- 2 847 588
- DE-A1- 3 928 580
- DE-A1- 4 210 084
- DE-A1- 10 259 465
- US-A1- 2002 089 187

## Beschreibung

Die Erfindung betrifft eine Verriegelungseinrichtung für ein Kraftfahrzeug umfassend einen Stellantrieb und den weiteren Merkmalen des Oberbegriffs des Hauptanspruchs sowie ein Verfahren zur Herstellung des Stellantriebs.

Ein Stellantrieb insbesondere für ein Kraftfahrzeug ist beispielsweise bekannt aus den Druckschriften DE 101 42 134 A1 sowie DE 10 2004 063 814 A1.

Eine Verriegelungseinrichtung umfasst ein Stellglied und einen durch das Stellglied bewegbaren Riegel. Mit der Verriegelungseinrichtung wird insbesondere eine Ladebuchse mit einem Ladestecker verriegelt, um eine Batterie eines elektrisch angetriebenen Kraftfahrzeugs aufzuladen.

Eine Batterie eines Elektro- oder Hybridkraftfahrzeugs wird mit Hilfe einer von außen erreichbaren Ladebuchse aufgeladen. Während einer Aufladung sollte sichergestellt werden können, dass der entsprechende, in die Ladebuchse eingesteckte Ladestecker nicht durch einen Unberechtigten abgenommen werden und der Ladevorgang sicher durchgeführt werden kann.

Eine Verriegelungseinrichtung für eine Ladebuchse und Ladestecker, die vor einem unbefugten Abnehmen des Ladesteckers zu schützen vermag, geht aus der Druckschrift DE 196 42 687 A1 hervor. Diese Verriegelungseinrichtung verfügt hierfür über ein Stellglied bzw. Stellantrieb, mit dem ein Riegel zwecks Verriegelung des Ladesteckers verstellt werden kann. Der Stellantrieb dient dem Verriegeln einer Verbindung eines Ladesteckers und einer Ladebuchse zum Aufladen der Batterie eines Elektrokraftfahrzeugs. Dies geschieht entweder durch Verriegeln eines Schwenkdeckels oder durch ein unmittelbares Verriegeln des Ladesteckers. Diese Vorrichtung nimmt ein relativ großes Bauvolumen ein. Sie kann hinsichtlich des Schutzes vor Feuchtigkeit optimiert werden.

Die Druckschrift DE 102 59 465 A1 offenbart einen Stellantrieb für ein Tankklappenschloss eines Kraftfahrzeugs mit einem Elektromotor, der eine Spindel zu drehen vermag. Eine Drehbewegung der Spindel bewirkt eine lineare Verschiebung eines Riegels. Der Riegel wird durch einen Faltenbalg nach außen abgedichtet, um den Stellantrieb vor Feuchtigkeit und Verschmutzung zu schützen. Der Faltenbalg führt allerdings zu einem relativ großen Bauraum.

Die Druckschrift DE 102 14 398 A1 offenbart eine Vorrichtung, die beispielsweise zur Ver-/Entriegelung von Kraftfahrzeug-Türverschlüssen eingesetzt werden kann, wobei die Vorrichtung mit einem Formgedächtniselement ausgerüstet ist.

Eine Einrichtung nach dem Oberbegriff des Anspruchs 1 ist aus DE 4210084 bekannt.

Ähnliche Vorrichtungen sind ebenfalls aus den Druckschriften DE3928580A1, WO01/07738A1, US2002/089187A1, WO87/04213A1, EP0195548A2, WO2009/143799A1 und DE2847588A1 bekannt.

Bei Stellantrieben mit elektrisch bewegbarem Riegel besteht das Problem, dass nicht entriegelt werden kann, wenn die zugehörige Elektrik bzw. Elektronik beschädigt ist. Es ist Aufgabe der Erfindung, eine weiter entwickelte Verriegelungseinrichtung für ein Kraftfahrzeug bereitzustellen.

Die Aufgabe wird durch die Verriegelungseinrichtung umfassend einen Stellantrieb gemäß dem Hauptanspruch und dem Herstellungsverfahren für einen solchen Stell-antrieb gemäß dem Nebenanspruch gelöst.

Die erfindungsgemäße Verriegelungseinrichtung umfasst einen Stellantrieb mit einem elektrisch bewegbaren Riegel. Beispielsweise weist der Stellantrieb einen Elektromotor auf, um den Riegel zum Beispiel in der aus der Druckschrift DE 102 59 465 A1 bekannten Weise in eine verriegelnde Stellung hinein zu bewegen. Ein Riegel kann aber auch auf andere Weise elektrisch bewegt werden, so zum Beispiel mit Hilfe eines Elektromagneten. Darüber hinaus umfasst der Stellantrieb einen Hebel, mit dem der Riegel handbetätigt aus seiner verriegelnden Stellung mechanisch zurück bewegt werden kann. Eine Person kann also den Hebel zum Beispiel an einem Griffelement ergreifen und diesen von Hand so bewegen, dass der Riegel dadurch in seine nicht verriegelnde Stellung hinein bewegt wird.

Bei einem Kraftfahrzeug besteht Bedarf, Bauteile verriegeln zu können und zwar insbesondere solche Bauteile, die von außen zugänglich sind. Ein Beispiel für ein solches Bauteil ist eine Klappe zur Abdeckung eines mit einer Kappe verschließbaren Tankstutzens, um so den Tank vor einem unbefugten Zugriff zu schützen. Erfindungsgemäß ist eine Verriegelung einer Verbindung zwischen einer Ladebuchse eines Elektrofahrzeugs und einem Ladestecker vorgesehen beispielsweise aus den in der Druckschrift DE196 42 687 A1 bekannten Gründen.

Mit Hilfe eines elektrischen Antriebs kann ein solches Verriegeln komfortabel und auch automatisiert durchgeführt werden. Für ein automatisches Verriegeln verfügt beispielsweise eine Ladebuchse über einen Sensor, der zu erkennen vermag, wenn ein Ladestecker in die Ladebuchse vollständig hinein geschoben worden ist. Der Sensor aktiviert dann den elektrischen Antrieb, der den Riegel dann in seine verriegelnde Stellung hinein bewegt.

Wird allerdings die Elektrik oder Elektronik eines Stellantriebs gestört, so kann nicht mehr mit Hilfe des elektrischen Antriebs entriegelt werden. Im Fall einer Klappe, die einen Tankstutzen verdeckt, ist aber ein Entriegeln notwendig, um ein Fahrzeug trotz entsprechend gestörter Elektrik oder Elektronik fortbewegen zu können.

Im Fall einer verriegelten Verbindung zwischen einer Ladebuchse und einem Ladestecker muss das Entriegeln ebenfalls zuverlässig unabhängig von Störungen der Elektrik oder Elektronik möglich sein, um mit einem Fahrzeug im Anschluss an ein Aufladen kurzfristig weiterfahren zu können. Aus diesem Grund umfasst der Stellantrieb einen Hebel, mit dem der Riegel handbetätigt mittels einer Mechanik aus seiner verriegelnden Stellung heraus bewegt werden kann.

Der Hebel kann und sollte so angeordnet werden, dass dieser nur vom Innenraum eines Fahrzeugs aus entweder unmittelbar oder mittelbar zum Beispiel mit Hilfe eines Bowdenzugs betätigt werden kann, um einen Riegel in seine nicht verriegelnde Stellung zu bewegen. Da Kraftfahrzeuge grundsätzlich so beschaffen sind, dass wenigstens eine Fahrzeugtür und/ oder -klappe auch rein mechanisch mit Hilfe eines Schlüssels geöffnet werden kann, kann sich ein Nutzer des Kraftfahrzeugs auch dann Zutritt zum Innenraum seines Fahrzeugs verschaffen, wenn eine für das Verriegeln vorgesehene Elektrik oder Elektronik gestört ist. Vom Innenraum aus kann dann der Fahrzeugnutzer den genannten Hebel des Stellantriebs manuell betätigen, um den Riegel aus seiner verriegelnden Stellung heraus zu bewegen. Anschließend kann ein Fahrzeug erforderlichenfalls betankt werden oder aber ein Ladestecker von einer Ladebuchse abgenommen werden, um eine Fahrt mit dem Kraftfahrzeug zuverlässig kurzfristig fortsetzen zu können.

In einer besonders einfachen Ausführungsform der Erfindung besteht der Hebel aus einem Bolzen mit einem daran angebrachten Griffelement oder einer daran angebrachten Öse für das Einhängen eines Bowdenzugs. Der Bolzen wird in einem Kanal des Stellantriebs geführt und kann gegen einen mit dem Riegel verbundenen Vorsprung bewegt werden und/ oder berührt diesen Vorsprung zumindest dann, wenn der Riegel in seine verriegelnde Stellung bewegt worden ist. Das Griffelement oder die Öse kann von außen (d. h. außerhalb des Stellelements) erreicht und bewegt werden. Das Griffelement kann so bewegt werden, dass der Bolzen den Vorsprung bewegt und damit auch den Riegel aus seiner verriegelnden Stellung heraus.

Befindet sich ein Bolzen des Riegels in einem Kanal, so weist der Bolzen vorteilhaft einen Dichtungsring auf, der einen Durchgang zwischen Bolzen und Kanal abzudichten vermag. Es kann so vermieden werden, dass Feuchtigkeit über den Kanal in das Innere des Stellantriebs gelangen und die Funktionstüchtigkeit der darin befindlichen Elektrik und/ oder Elektronik beeinträchtigen kann.

Das Gehäuse des Stellantriebs ist erfindungsgemäß staub- und feuchtigkeitsdicht verschlossen und zwar zumindest im eingebauten Zustand. Im Unterschied zu dem aus der DE 102 59 465 A1 bekannten Stand der Technik wird der Riegel allerdings vorzugsweise nicht durch einen Faltenbalg abgedichtet, sondern durch eine flache, am Gehäuse des Faltenbalgs anliegende Dichtmanschette. Dadurch wird im Vergleich zu dem aus der DE 102 59 465 A1 bekannten Stand der Technik der erforderliche Bauraum beträchtlich reduziert. Der Stellantrieb kann im eingebauten Zustand mit seiner Dichtmanschette gegen eine Wand eines Bauteils gepresst werden, wodurch die Verbindung zwischen der Wand des Bauteils und dem Stellantrieb in hohem Maße feuchtigkeits- und staubdicht verschlossen wird und zwar insbesondere auch im Vergleich zu dem aus der DE 102 59 465 A1 bekanntem Stand der Technik. Einschlägige Normen, die sich auf einen Schutz vor Feuchtigkeit und Staub beziehen, können problemlos erfüllt werden.

Auch der Raum des Bauteils ist staub- und feuchtigkeitsdicht verschlossen, in den der Riegel zwecks Verriegelung hineinreicht. Ein Beispiel für ein solches Bauteil mit einem feuchtigkeits- und staubdicht verschließbaren Raum, in den der Riegel eines Stellantriebs hineinreicht, geht aus der deutschen Patenanmeldung 102 01 000 3523.8 hervor. Es handelt sich bei einem solchen Bauteil insbesondere um eine Ladebuchse für ein Elektrofahrzeug, die geeignet staub- und feuchtigkeitsdicht verschlossen werden kann und zwar entweder durch einen Deckel oder aber durch einen Ladestecker.

Der Stellantrieb verfügt über einen Sensor, so zum Beispiel einen Mikroschalter, der die Stellung des Riegels zu detektieren vermag. Zu diesem Zweck ist der Riegel mit einer Rampe verbunden, die einen Mikroschalter zu betätigen vermag, wenn der Riegel aus seiner verriegelnden Stellung heraus bewegt wird. Umgekehrt kann die Rampe auch so angeordnet sein, dass diese den Mikroschalter betätigt, wenn der Riegel in seine verriegelnde Stellung hinein bewegt wird. Der Sensor kann mit einer Anzeige verbunden sein, die zum Beispiel im Inneren eines Fahrzeugs angeordnet ist. Der Fahrzeugnutzer eines Fahrzeugs kann sich so darüber informieren, welche Stellung der Riegel des Stellantriebs einnimmt.

Der Stellantrieb kann außerdem eine vorgespannte Feder umfassen, die den Riegel aufgrund ihrer Vorspannung in eine vorgesehene Richtung zu bewegen vermag, so zum Beispiel in die verriegelnde Stellung hinein. Es steht dann ein ergänzendes mechanisches Mittel zur Verfügung, um den Riegel auch mechanisch in seine verriegelnde Stellung bewegen zu können, beispielsweis im Anschluss an eine Freigabe einer Arretierung des anspruchsgemäßen Hebels. Die Funktionstüchtigkeit des Stell-antriebs kann so weiter verbessert sichergestellt werden.

Insgesamt kann ein solcher Stellantrieb sehr klein gebaut sein. Ein erfindungsgemäßer Stellantrieb ist insbesondere Teil einer Verriegelung für eine Klappe, mit der ein Tankstutzen abgedeckt wird, oder Teil einer Verriegelung für eine Ladebuchse eines elektrisch angetriebenen Kraftfahrzeugs mit einem Ladestecker. Zur Verriegelung einer Verbindung zwischen einer Ladebuchse eines Elektrofahrzeugs und einem Ladestecker reicht der Riegel zwecks Verriegelung in eine Ausnehmung oder in ein Loch in einer Gehäusewand des Ladesteckers hinein, um auf einfache und kompakte Weise die Verriegelung zu bewirken. Der Stellantrieb ist von außen an einer Gehäusewand der Ladebuchse befestigt. Es ist zu bevorzugen, dass die Ladebuchse und der Stecker so beschaffen sind, dass diese durch eine reine Translationsbewegung verbunden werden. Für ein Verbinden ist also keine Drehbewegung in der aus der DE 196 42 687 A1 bekannten Weise erforderlich. Diese Ausführungsform der Erfindung benötigt einen relativ kleinen Bauraum, da kein Raum für eine Drehbewegung in einem Gehäuse bereitgestellt werden muss, welches zugleich vor einem versehentlichen Berühren der elektrischen Kontakte schützt.

Der Stellantrieb kann auch mehrere Riegel aufweisen, wenn ein Bauteil besonders sicher verriegelt werden soll.

Der Riegel kann mit Hilfe des Antriebs zwischen einer Ausgangsstellung und einer verriegelnden Stellung hin und her bewegt werden. Es handelt sich bei dem Antrieb insbesondere um einen elektrischen Antrieb. Es kann sich aber auch zum Beispiel um einen pneumatischen Antrieb handeln oder aber um einen Antrieb, der Wärme in mechanische Arbeit umwandelt, so zum Beispiel mit Hilfe einer Formgedächtnislegierung. Erfindungsgemäß bewegt der Antrieb den Riegel lediglich elektrisch in eine Richtung. Die Bewegung in die andere Richtung kann mit Hilfe einer gespannten Feder erfolgen.

Der Stellantrieb kann also zum Beispiel die bereits in der nicht vorveröffentlichten deutschen Patentanmeldung 10 2010 029 446 beschriebene vorgespannte Feder umfassen, die den Riegel aufgrund ihrer Vorspannung in eine vorgesehene Richtung zu bewegen vermag, so zum Beispiel in die verriegelnde Stellung hinein. Der Riegel kann dann durch die Feder zum Beispiel in seine verriegelnde Stellung beweget werden, insbesondere im Anschluss an eine Freigabe einer.

Ist ein Antrieb im Sinne der vorliegenden Anmeldung vorhanden, so ist für das Bewegen des Riegels nicht manuell eine entsprechende Arbeit zu verrichten. Beispielsweise handelt es sich bei dem Antrieb um einen Elektromotor, um den Riegel zum Beispiel in der aus der Druckschrift DE 102 59 465 A1 bekannten Weise in eine verriegelnde Stellung hinein zu bewegen. Ein Riegel kann aber auch auf andere Weise elektrisch bewegt werden, so zum Beispiel mit Hilfe eines Elektromagneten. Darüber hinaus umfasst der Stellantrieb einen drehbar gelagerten Hebel, mit dem der Riegel manuell, also handbetätigt aus seiner verriegelnden Stellung mechanisch durch eine Drehbewegung in seine Ausgangsstellung bewegt werden kann. Eine Person kann also den Hebel zum Beispiel an einem Griffelement ergreifen und diesen von Hand so drehen, dass der Riegel dadurch in seine nicht verriegelnde Ausgangsstellung bewegt wird.

Bei einem Kraftfahrzeug besteht Bedarf, Bauteile verriegeln zu können und zwar insbesondere solche Bauteile, die von außen zugänglich sind. Ein Beispiel für ein solches Bauteil ist eine Klappe zur Abdeckung eines mit einer Kappe verschließbaren Tankstutzens, um so den Tankinhalt vor einem unbefugten Zugriff zu schützen. Gleiches gilt für die Verriegelung der Verbindung zwischen der Ladebuchse des Elektrofahrzeugs und dem Ladestecker zum Aufladen der Batterie beispielsweise aus den in der Druckschrift DE 196 42 687 A1 bekannten Gründen.

Mit Hilfe eines elektrischen Antriebs kann ein solches Verriegeln komfortabel und auch automatisiert durchgeführt werden. Für ein automatisches Verriegeln verfügt beispielsweise eine Ladebuchse über einen Sensor, der zu erkennen vermag, wenn ein Ladestecker in die Ladebuchse vollständig hinein geschoben worden ist. Der Sensor aktiviert dann den elektrischen Antrieb, der den Riegel daraufhin in seine verriegelnde Stellung hinein bewegt.

Wird allerdings die Elektrik oder Elektronik eines solchen Stellantriebs gestört, so kann nicht mehr mit Hilfe des elektrischen Antriebs entriegelt werden. Im Fall einer Klappe, die einen Tankstutzen verdeckt, ist aber ein Entriegeln notwendig, um ein Fahrzeug trotz entsprechend gestörter Elektrik oder Elektronik fortbewegen zu können. Im Fall einer verriegelten Verbindung zwischen einer Ladebuchse und einem Ladestecker muss das Entriegeln ebenfalls zuverlässig unabhängig von Störungen der Elektrik oder Elektronik möglich sein, um mit einem Fahrzeug im Anschluss an ein Aufladen kurzfristig weiterfahren zu können. Aus diesem Grund umfasst der Stellantrieb den drehbar gelagerten Hebel, mit dem der Riegel handbetätigt aus seiner verriegelnden Stellung heraus bewegt werden kann. Der Stellantrieb gemäß Hauptanspruch weist also einen Drehmechanismus für eine Notentriegelung auf, der manuell betätigt werden kann.

Wird der Stellantrieb gemäß Hauptanspruch sowie dem Nebenanspruch bei einem Kraftfahrzeug eingesetzt, so besteht das Problem, dass der Stellantrieb extremen Umgebungsbedingungen gewachsen sein muss. Einerseits ist ein solcher Stellantrieb so zu konstruieren, dass er großen Temperaturunterschieden gewachsen ist. Er ist weiter so zu konstruieren, dass er durch Spritzwasser, Stöße, Staub und Steinschlag nicht beschädigt wird. Um solche Anforderungen erfüllen zu können, ist der für die Notentriegelung vorgesehene Hebel drehbar gelagert. Eine drehbare Lagerung kann vor allem im Vergleich zu einer verschiebbaren Lagerung besonders zuverlässig dicht ausgestaltet sein, ohne dass Feuchtigkeit oder Staub durch die Dichtung hindurch treten oder die Dichtung beschädigen kann. Der drehbare Hebel ist also vor allem dann von besonderem Vorteil, wenn die Komponenten des Stellglieds, die innerhalb des Gehäuses des Stellglieds untergebracht sind, vor Staub und Feuchtigkeit geschützt werden sollen.

Der drehbare Hebel kann im Fall eines Kraftfahrzeugs so angeordnet werden, dass dieser nur vom Innenraum eines Fahrzeugs aus entweder unmittelbar oder mittelbar zum Beispiel mit Hilfe eines Bowdenzugs betätigt werden kann, um den Riegel des Stellantriebs in seine nicht verriegelnde Stellung zu bewegen. Da Kraftfahrzeuge grundsätzlich so beschaffen sind, dass wenigstens eine Fahrzeugtür und/ oder-klappe auch rein mechanisch mit Hilfe eines Schlüssels geöffnet werden kann, kann sich ein Fahrzeugnutzer des Kraftfahrzeugs auch dann Zutritt zum Innenraum seines Fahrzeugs verschaffen, wenn eine für das Verriegeln vorgesehene Elektrik oder Elektronik gestört ist. Vom Innenraum aus kann dann der Fahrzeugnutzer den genannten drehbaren Hebel des Stellantriebs manuell betätigen, um den Riegel aus seiner verriegelnden Stellung heraus zu bewegen. Anschließend kann ein Fahrzeug erforderlichenfalls betankt werden oder aber ein Ladestecker von einer Ladebuchse abgenommen werden, um eine Fahrt mit dem Kraftfahrzeug zuverlässig kurzfristig fortsetzen zu können.

In einer besonders einfachen Ausführungsform der Erfindung umfasst der drehbare Hebel einen drehbaren Innenhebel, der über eine drehbar gelagerte Achse mit einem drehbaren Außenhebel verbunden ist. Der Innenhebel befindet sich innerhalb des Gehäuses des Stellantriebs und kann daher nicht manuell betätigt werden. Der Außenhebel befindet sich außerhalb des Gehäuses des Stellantriebs und kann daher manuell betätigt werden. Die drehbar gelagerte Achse führt durch das Gehäuse des Stellantriebs hindurch. Wird der außen liegende Hebel gedreht, so wird die Drehbewegung über die Achse auf den Innenhebel übertragen. Der Innenhebel vermag durch eine entsprechende Drehbewegung den Riegel in seine Ausgangsstellung zu bewegen. Eine technisch besonders einfache und zuverlässige Weise der Notentriegelung kann so realisiert werden.

Der Stellantrieb umfasst eine Raste, die den Riegel in seiner Ausgangsstellung verrastet. Die Raste vermeidet, dass der Riegel ausgehend von seiner verriegelnden Stellung in seine Ausgangsstellung bewegt und hier aufgrund eines Rückpralls unerwünscht ein wenig zurückbewegt wird. Die Raste vermeidet auf technisch einfache Weise eine solche unerwünschte Rückprallwirkung. Indem der Riegel mit hinreichend großer Kraft in Richtung verriegelnde Stellung bewegt wird, wird der Riegel aus seiner verrasteten Stellung heraus bewegt.

In einer Ausführungsform umfasst die Raste eine Rastnase, die in eine Rastnut einrastet, wenn der Riegel in seine Ausgangsstellung bewegt wird und diese erreicht. Die Rastnase kann federnd mit dem Riegel verbunden sein. Innerhalb des Gehäuses ist dann eine damit korrespondierende Rastnut vorhanden, in die die federnd gelagerte Rastnase in der Ausgangsstellung eingerastet ist. Umgekehrt kann aber auch die Rastnut anstelle der Rastnase federnd gelagert sein, so zum Beispiel durch eine federnde Befestigung an einer Gehäuseinnenwand. Es ist auch möglich, dass eine Rastnut mit dem Riegel verbunden ist und eine zugehörige Rastnase mit dem Gehäuse des Stellglieds.

Der Riegel wird in der verriegelnden Stellung durch eine oder durch die bereits genannte Raste verrastet, um eine Rückbewegung aufgrund eines Rückpralls zu vermeiden, wenn der Riegel in die Endstellung bewegt wird. Es können dann zwei entsprechend angeordnete Rastnuten vorhanden sein. In der Ausgangsstellung rastet die Rastnase in der einen Endstellung ein. In der verriegelnden Stellung rastet die Rastnase in der anderen Rastnut ein. Es können aber auch zwei entsprechend angeordnete Rastnasen vorhanden sein und ein Nut, um ein Verrasten sowohl in der Ausgangsstellung als auch in der verriegelnden Stellung zu bewirken.

Ein Bolzen des Riegels wird durch eine elastische Einschnürung bewegt, um von der Ausgangsstellung in die verriegelnde Stellung bewegt zu werden oder umgekehrt von der verriegelnden Stellung in die Ausgangsstellung. Die elastische Einschnürung kann durch einen U-förmig gebogenen metallischen Draht bereit gestellt sein, wobei zumindest ein Schenkel des U's nach innen in Richtung des anderen U-Schenkels ausgebeuft ist. Durch diese Ausführungsform können Rückprallbewegungen des Riegels besonders zuverlässig vermieden werden.

In einer Ausführungsform der Erfindung ist das Ende des Riegels, welches aus dem Gehäuse des Stellglieds herauszuragen vermag, abgeschrägt wie die Schlossfalle eines Schlosses. Vorzugsweise kann dann der Riegel mit Hilfe von Federkraft in die verriegelnde Stellung bewegt werden. Ein solches Stellglied kann dazu genutzt werden, um beispielsweise eine Tankklappe in gleicher Weise zu verschließen, wie dies bei einer Tür mit Schlossfalle, die per Federkraft herausgedrückt wird, geschieht: Aufgrund der Schräge wird der Riegel durch das Schließen der Klappe zunächst zurückgedrückt, um anschließend aufgrund der Federkraft zurück in die verriegelnde Stellung zu springen und so die Klappe zu verschließen. Für das Zurückdrücken kann die Klappe einen Bolzen umfassen, hinter dem der Riegel schließlich wieder in die verriegelnde Stellung gelangt. Um die Klappe zu öffnen, wird der Riegel in der Regel elektrisch bewegt. Alternativ kann der Riegel durch den drehbaren Hebel in seine Ausgangsstellung bewegt werden, um die Klappe wieder öffnen zu können.

In einer Ausführungsform der Erfindung wird das Stellglied dazu verwendet, um zum Beispiel über einen Bowdenzug eine Schlossfalle - insbesondere aus der verriegelnden Stellung heraus - zu bewegen, damit zum Beispiel eine mit der Falle verriegelte Klappe geöffnet oder ein mit der Falle verriegelter Ladestecker entfernt werden kann. Es muss dann nicht unmittelbar bei der Klappe oder bei der Ladebuchse Bauraum für das Stellglied bereitgestellt werden.

In einer Ausführungsform der Erfindung verfügt der Stellantrieb über einen Mikroschalter als Sensor, der die Stellung des Riegels zu detektieren vermag und zwar insbesondere in der in der nicht vorveröffentlichten deutschen Patentanmeldung 10 2010 029 446 beschriebenen Weise.

Erfindungsgemäß ist zu diesem Zweck der Riegel mit einer Rampe verbunden, die einen Sensor, der ein Mikroschalter sein kann, zu betätigen vermag, wenn der Riegel aus seiner verriegelnden Stellung heraus bewegt wird. Umgekehrt kann die Rampe auch so angeordnet sein, dass diese den Sensor oder Mikroschalter betätigt, wenn der Riegel in seine verriegelnde Stellung hinein bewegt wird. Der Sensor kann mit einer Anzeige verbunden sein, die zum Beispiel im Inneren eines Fahrzeugs angeordnet ist. Der Fahrzeugnutzer eines Fahrzeugs kann sich so darüber informieren, welche Stellung der Riegel des Stellantriebs einnimmt.

Insgesamt kann ein solcher Stellantrieb sehr klein gebaut sein. Ein erfindungsgemäßer Stellantrieb ist insbesondere Teil einer Verriegelung für eine Klappe, mit der ein Tankstutzen abgedeckt wird, oder Teil einer Verriegelung für eine Ladebuchse eines elektrisch angetriebenen Kraftfahrzeugs mit einem Ladestecker.

Bei dem Stellantrieb, der der Verriegelung einer Verbindung zwischen einer Ladebuchse eines Elektrofahrzeugs und einem Ladestecker dient, reicht der Riegel oder aber ein mit Hilfe des Stellglieds fernbetätigter Riegel vorzugsweise zwecks Verriegelung in eine Ausnehmung oder in ein Loch in einer Gehäusewand des Ladesteckers hinein, um auf einfache und kompakte Weise die Verriegelung zu bewirken. Vorzugsweise ist der Stellantrieb dann von außen an einer Gehäusewand der Ladebuchse befestigt. Weiter ist zu bevorzugen, dass Ladebuchse und Stecker so beschaffen sind, dass diese durch eine reine Translationsbewegung verbunden werden. Für ein Verbinden ist also keine Drehbewegung in der aus der DE 196 42 687 A1 bekannten Weise erforderlich. Diese Ausführungsform der Erfindung benötigt einen relativ kleinen Bauraum, da kein Raum für eine Drehbewegung in einem Gehäuse bereitgestellt werden muss, weiches zugleich vor einem versehentlichen Berühren der elektrischen Kontakte schützt.

Das Gehäuse des Stellantriebs ist staub- und feuchtigkeitsdicht verschlossen und zwar zumindest im eingebauten Zustand. Der Riegel kann durch einen Faltenbalg abgedichtet sein. Bevorzugt wird jedoch für eine solche Abdichtung eine flache, am Gehäuse des Stellantriebs anliegende Dichtmanschette, um mit einem geringen Bauraum auskommen zu können. Erfindungsgemäß ist der Stellantrieb im eingebauten Zustand mit seiner Dichtmanschette gegen eine Wand eines Bauteils gepresst, wodurch die Verbindung zwischen der Wand des Bauteils und dem Stellantrieb in hohem Maße feuchtigkeits- und staubdicht verschlossen wird. Einschlägige Normen, die sich auf einen Schutz vor Feuchtigkeit und Staub beziehen, können problemlos erfüllt werden.

Der Raum des Bauteils ist staub- und feuchtigkeitsdicht verschlossen, in den der Riegel zwecks Verriegelung hineinreicht. Ein Beispiel für ein solches Bauteil mit einem feuchtigkeits- und staubdicht verschließbaren Raum, in den der Riegel eines Stellantriebs hineinreicht, geht aus der nicht vorveröffentlichten deutschen Patenanmeldung 102 01 000 3523 hervor. Es handelt sich bei einem solchen Bauteil um eine Ladebuchse für ein Elektrofahrzeug, die geeignet staub- und feuchtigkeitsdicht verschlossen werden kann und zwar entweder durch einen Deckel oder aber durch einen Ladestecker. Insgesamt steht so eine Gesamtvorrichtung mit einem Stellantrieb zur Verfügung, der einen besonders kleinen Bauraum aufweist und der sehr gut u. a. gegen Feuchtigkeit und Staub geschützt ist.

Der Stellantrieb kann auch mehrere Riegel aufweisen, wenn ein Bauteil besonders sicher verriegelt werden soll. In einem jeden Riegel kann ein verstärkender Stift sein, der den herausstehenden Teil des Riegels zu stabilisieren vermag.

Mit der Verriegelungseinrichtung nach dem Hauptanspruch wird ein erstes Bauteil mit einem zweiten verbunden. Die Verbindung zwischen den beiden Bauteilen kann erst nach einer Entriegelung wieder gelöst werden.

Die erfindungsgemäße Verriegelungseinrichtung umfasst das Stellglied mit dem Riegel, das an einer Gehäusewand eines ersten Bauteils angebracht ist. Ein zweites Bauteil weist eine zweite Gehäusewand auf. Zwecks Verriegelung wird die Gehäusewand des zweiten Bauteils in eine Öffnung der Gehäusewand des ersten Bauteils hineingeschoben. Anschließend wird der Riegel durch das Stellglied durch ein Loch der Gehäusewand des ersten Bauteils hindurch geschoben und weiter in ein Loch oder in eine Ausnehmung der benachbarten Gehäusewand des zweiten Bauteils hinein, um so die beiden Bauteile miteinander zu verriegeln. Die beiden Bauteile können dann erst wieder voneinander gelöst werden, wenn der Riegel durch das Stellglied zurück bewegt worden ist.

Für ein Verriegeln der beiden Bauteile kann auch mehr als ein Riegel vorgesehen sein. So können beispielsweise zwei Riegel vorhanden sein, die durch das Stellglied bewegt werden, um die zwei Bauteile miteinander zu verriegeln bzw. zu entriegeln.

Die zwei Bauteile Ladebuchse und Ladestecker können so automatisiert miteinander verriegelt werden, ohne dafür einen großen Bauraum bereitstellen zu müssen. Zumindest ein Bauteil ist in einer Ausführungsform Teil eines Kraftfahrzeugs und zwar insbesondere das erste Bauteil. Das erste Bauteil ist eine Ladebuchse. Das zweite Bauteil ist dann ein Ladestecker. Nachfolgend werden weitere Vorteile und Ausgestaltungen beschrieben.

Wie von einer Kraftfahrzeug-Lade-Steckdose bereits bekannt, befinden sich die elektrischen Kontakte einer Ladebuchse geschützt in einer oder mehreren Ausnehmung(en). In diese Ausnehmung(en) können damit korrespondierende, zum Beispiel stift- oder stabförmige Kontakte eines Ladesteckers zwecks Kontaktierung hineingeschoben werden. Um die ein oder mehrere Ausnehmung(en) herum gibt es ein angrenzendes, insbesondere umlaufendes Gehäuse. Zwischen den Ausnehmung(en) und dem angrenzenden Gehäuse verbleibt so ein spaltförmiger, insbesondere die Ausnehmung(en) umlaufender Raum, in den ein damit korrespondierendes Gehäuse eines Ladesteckers hineingeschoben werden kann. Ein Stellglied mit wenigstens einem Riegel ist außen auf dem angrenzenden Gehäuse angebracht. Der Riegel kann durch das Stellglied in das angrenzende Gehäuse durch eine entsprechende Öffnung hindurch zwecks Verriegelung eines Ladesteckers hineinbewegt werden und zwar insbesondere senkrecht relativ zur angrenzenden Gehäusewand. Entsprechendes kann für einen weiteren Riegel gelten, falls mehr als ein Riegel vorhanden ist. Das korrespondierende Ladesteckergehäuse umfasst eine Ausnehmung oder ein Loch. In diese Ausnehmung bzw. in dieses Loch gelangt der Riegel hinein, wodurch die Verbindung zwischen Ladestecker und Ladebuchse verriegelt und der Ladestecker gegen eine unbefugte Abnahme gesichert wird. Soll eine verriegelte Verbindung zwischen Ladestecker und Ladebuchse gelöst werden, so wird der Riegel durch das Stellglied aus der Ausnehmung oder dem Loch des Steckergehäuses heraus bewegt. Anschließend kann der Stecker abgezogen werden.

Der Ladestecker benötigt inklusive seiner Verriegelungseinrichtung einen sehr kleinen Bauraum, der nur unwesentlich größer ist im Vergleich zu dem Bauraum, den eine Ladebuchse benötigen würde, die keinen Verriegelungsmechanismus umfasst. Der Bauraum des zugehörigen Ladesteckers wird durch die Verriegelungsmöglichkeit nicht oder zumindest kaum vergrößert, da lediglich eine Ausnehmung für den Riegel bereitzustellen ist. Die Kontakte der Ladebuchse befinden sich in zumindest einer Ausnehmung, die jederzeit vor einem versehentlichen Berühren der Kontakte schützt. Verläuft das angrenzende Gehäuse der Ladebuchse um die Ausnehmung(en) herum, so wird zwar der Bauraum dadurch geringfügig vergrößert. Es wird aber so möglich, jederzeit einen besonders zuverlässigen Schutz vor Nässe bereit zu stellen. Außerdem wird die Verbindung zwischen Ladebuchse und eingestecktem Ladestecker mechanisch stabilisiert.

Grundsätzlich wird der Riegel durch das Stellglied zwischen seinen beiden Stellungen elektrisch angetrieben hin und her bewegt, also zwischen seiner verriegelnden Stellung und der Stellung, die ein Abnehmen eines Ladesteckers von der Ladebuchse ermöglicht. Es können aber auch alternativ oder ergänzend rein mechanische Mittel vorgesehen sein, um den Riegel durch das Stellmittel zwischen seinen beiden Stellungen mechanisch angetrieben hin und her zu bewegen. Vorzugsweise kann die Mechanik dann lediglich vom Innenraum des Fahrzeugs aus betätigt werden, um so ein Betätigen durch Unbefugte verhindern zu können. Ein Verriegeln oder Entriegeln einer Verbindung zwischen Ladebuchse und Ladestecker ist bei dieser Ausführungsform auch dann möglich, wenn eine entsprechende Elektrik versagt.

Das Stellglied umfasst eine Mechanik, mit der der Riegel mechanisch aus seiner verriegelnden Position heraus, aber nicht hinein bewegt werden kann. Diese Mechanik dient dazu, dass eine verriegelte Verbindung zwischen einer Ladebuchse und einem eingesteckten Ladestecker auch dann entriegelt werden kann, wenn eine für das Entriegeln vorgesehene Elektrik versagt. Eine solche Mechanik kann leicht über einen Bowdenzug betätigt werden, der mit einem im Innenraum des Fahrzeugs vorhandenem Betätigungsmittel verbunden ist.

In einer Ausführungsform der Erfindung ist an der Ladebuchse und zwar insbesondere an dem Gehäuse, welches an die Ausnehmung(en) der Ladebuchse angrenzt, ein Deckel angebracht, mit dem die Ausnehmung(en) verschlossen werden können. Die Ausnehmung(en) werden so vor Nässe und Verschmutzungen geschützt, wenn sich kein Ladestecker in der Ladebuchse befindet. Der Deckel kann nach außen schwenkbar angebracht sein, so dass er im geöffneten Zustand vom Fahrzeug absteht. Der Deckel kann so drehbar angebracht sein, dass dieser innerhalb einer Ebene bewegt wird, um die Ausnehmung(en) freizugeben oder zu verschließen. Der Deckel kann abschließbar ausgestaltet sein, um die Ladebuchse vor mutwilligen Beschädigungen zu schützen. Der Deckel kann mit wenigstens einem, insbesondere aus einem elastischen Material wie Gummi bestehenden Dichtring versehen sein, der die Ausnehmung(en) staub- und feuchtigkeitsdicht abdichtet bzw. zu einer solchen Abdichtung beiträgt, wenn die Ladebuchse durch den Deckel verschlossen wird. Alternativ oder ergänzend können die Ausnehmung(en) mit einem oder mehreren solchen Dichtringen versehen sein, die zu einer staub- und feuchtigkeitsdichten Abdichtung beitragen, wenn der Deckel die Ausnehmung(en) verschließt.

Der Deckel und/ oder die Buchse können über Rastmittel verfügen, die an einer geeignet angeordneten Rast einrasten, wenn der Deckel die Ausnehmung(en) verschließt, um so den Deckel zuverlässig in seiner geschlossenen Stellung zu fixieren. Der Deckel kann zum Beispiel mittels einer vorgespannten Feder in Richtung seiner geschlossenen Stellung vorgespannt sein, so dass der Deckel in seine geschlossene Stellung hinein bewegt wird, wenn er nicht extern daran gehindert wird, so zum Beispiel durch einen in die Ladebuchse eingesteckten Ladestecker.

Sind die Ausnehmung(en) mit einem oder mehreren vorgenannten Dichtringen versehen, so tragen diese in einer Ausführungsform zu einer staub- und feuchtigkeitsdichten Verbindung zwischen Ladebuchse und eingestecktem Ladestecker bei, um während des Aufladens die elektrischen Kontakte vor Feuchtigkeit und Verschmutzung zu schützen. Alternativ oder ergänzend kann ein zugehöriger Ladestecker mit ein oder mehreren Dichtringen versehen sein, die während des Aufladens die elektrischen Kontakte vor Feuchtigkeit und Verschmutzung zu schützen vermögen.

Das Stellglied wird mit einem staub- und feuchtigkeitsdichten Gehäuse bereitgestellt. Das Gehäuse kann aus zwei Halbschalen bestehen, zwischen denen sich eine Dichtschnur befindet, um eine staub- und feuchtigkeitsdichte Verbindung zwischen den beiden Halbschalen zu erhalten. Im Inneren des Gehäuses befinden sich dann die Antriebsmittel, um den Riegel elektrisch angetrieben bewegen zu können. Die nach außen führenden elektrischen Kontakte, die für eine Stromversorgung benötigt werden, sind ebenfalls so abgedichtet, dass entlang dieser Kontakte kein Staub und Feuchtigkeit in den Innenraum des Stellglieds gelangen kann. Es verbleibt dann der Bereich um den Riegel herum, über den Staub und Feuchtigkeit in den Innenraum des Stellglieds gelangen könnte. Um auch hier für eine Abdichtung zu sorgen, wird eine flache, insbesondere aus elastischem Material bestehende Dichtungsmanschette vorgesehen, die zwischen der Gehäusewand des Stellglieds und der angrenzenden Gehäusewand der Ladebuchse angeordnet ist, so dass kein Staub oder Feuchtigkeit zwischen den beiden Wänden hindurch in das Stellglied gelangen kann. Wird nun auch die Ladebuchse staub- und feuchtigkeitsdicht verschlossen, so ist das gesamte System absolut zuverlässig gegen eindringende Feuchtigkeit bzw. eindringenden Staub geschützt. Das Stellglied wird zum Beispiel an der Wand der Ladebuchse angeschraubt oder angenietet, um so eine feste, dauerhafte Verbindung zu schaffen.

Eine elektrische Kontaktierung zwischen Ladebuchse und Ladestecker kann hergestellt werden, indem entsprechende elektrische Leiter von Ladebuchse und Ladestecker mechanisch miteinander verbunden werden. Es genügt allerdings auch eine induktive Verbindung, die durch Ladebuchse und Ladestecker für ein Aufladen hergestellt wird.

In einer Ausführungsform umfasst die Ladebuchse einen Sensor zum Beispiel in Form eines Mikroschalters, der zu signalisieren vermag, wenn ein Ladestecker vollständig in die Ladebuchse hineingesteckt bzw. geschoben worden ist. Der Mikroschalter aktiviert dann bevorzugt automatisiert das Bewegen des Riegels in seine verriegelnde Stellung hinein.

In einer Ausführungsform ist die Ladebuchse mit einem Anschlag versehen, gegen den ein damit korrespondierendes Element des Ladesteckers stößt, wenn die Ladebuchse hinreichend weit in die Ladebuchse hineingeschoben worden ist. Der Anschlag sowie das dazu korrespondierende Element des Ladesteckers sind vorzugsweise so umlaufend angeordnet, dass hierdurch eine Abdichtung vor äußeren Einflüssen bereitgestellt werden kann, wenn sich der Ladestecker in der Ladebuchse befindet.

In einer Ausführungsform beträgt der Hub des Riegels wenigstens 10 mm, wodurch eine hohe Diebstahlsicherheit erreicht wird, da der Riegel dann relativ weit zwecks Verriegelung in eine entsprechende Ausnehmung oder in ein Loch des Ladesteckers hineinreichen kann.

In einer Ausführungsform ist das Stellglied mit einem drahtlosem Empfänger verbunden. Erhält der Empfänger ein entsprechendes Signal von einem drahtlosen Sender, so bewegt das Stellglied den Riegel aus seiner verriegelnden Position. Ein legitimierter Benutzer kann so durch Versenden oder Auslösen einer geeigneten drahtlosen Information den Riegel entriegeln.

In einer Ausführungsform gibt es im Fahrzeuginnenraum ein Betätigungselement, mit dem das Entriegeln durch das Stellglied ausgelöst werden kann. Bei verschlossenem Fahrzeug wird ein Unbefugter so daran gehindert, den Riegel zu entriegeln.

In einer Ausführungsform der Erfindung ist die Ladebuchse - wie von einem Tankstutzen her bekannt - innerhalb der Karosserie eines Kraftfahrzeugs hinter einem Deckel angeordnet, der an der Karosserie klappbar befestigt ist. Die Ladebuchse steht dann nicht gegenüber der Karosserie hervor und wird dennoch durch einen Deckel geschützt, was in Unfallsituationen wichtig ist.

In einer Ausführungsform der Erfindung umfassen Ladebuchse und Ladestecker elektrische Kontakte für einen Starkstromanschluss und/ oder elektrische Kontakte für einen Anschluss an eine konventionelle Steckdose, wie diese in Privathaushalten üblich ist. Der Starkstromanschluss unterscheidet sich von den Kontakten für einen konventionellen Haushaltsstrom in der Regel durch geeignet größere Durchmesser. Die Kontakte für einen Haushaltsanschluss sind regelmäßig mit einem Gleichrichter verbunden. Ein solcher Gleichrichter kann bei einem Starkstrom zum Beispiel dann entfallen, wenn der Starkstrom als Gleichstrom bereitgestellt wird.

In einer Ausführungsform ist der Riegel durch eine Feder in Richtung seiner verriegelnden Stellung vorgespannt. Insbesondere das von außen in Richtung Ladebuchse ragende Ende des Riegels verfügt über eine Rampe. Wird ein Ladestecker in die Ladebuchse hinein bewegt, so wird der vorgespannte Riegel aufgrund einer dafür vorgesehenen Rampe gegen seine Federkraft zurück in Richtung entriegelnde Stellung gedrückt. Wird der Ladestecker schließlich in seine Endstellung in die Ladebuchse hinein bewegt, so wird der Riegel durch die Federkraft in das im Ladestecker vorhandene Loch bzw. in die vorhandene Ausnehmung hinein bewegt und verriegelt so die Verbindung zwischen Ladebuchse und Ladestecker. Das in die Ladebuchse hineinragende Ende ist ferner so gestaltet, dass der Ladestecker nicht mehr heraus gezogen werden kann. Dies ist stattdessen erst dann möglich, wenn das Stellglied den Riegel aus seiner verriegelnden Stellung heraus bewegt.

Es ist denkbar, dass die Kontakte der Ladebuchse aus ihren Ausnehmungen nach außen herausragen. Dies ist aber nicht sehr zweckmäßig, da diese nach außen herausragenden Enden entsprechend ungeschützt sind. Es ist daher zu bevorzugen, dass sich die Kontakte vollständig in Ausnehmungen befinden.

Ein zugehöriger Ladestecker weist bevorzugt ebenfalls Ausnehmungen auf, in denen sich jeweils die Kontakte des Ladesteckers befinden, um zum Beispiel zuverlässig vor einem versehentlichen Berühren zu schützen. Die Ausnehmungen von Ladestecker und Ladebuchse werden dann in der Regel in-einander geschoben, wenn der Ladestecker mit der Ladebuchse verbunden wird und sämtliche Kontakte sich vollständig in zugehörigen Ausnehmungen befinden.

Das Stellglied kann einen Elektromotor umfassen, um den Riegel zum Beispiel in der aus der Druckschrift DE 102 59 465 A1 bekannten Weise zu bewegen. Das Stellglied kann ein Formgedächtniselement umfassen, um den Riegel zum Beispiel in der aus der Druckschrift DE 102 14 398 A1 bekannten Weise zu bewegen. Das Stellglied kann den Riegel in einer dritten Ausführungsform allein mit Hilfe von magnetischen Kräften in gewünschter Weise bewegen. Das Gehäuse des Stellantriebs kann eine Membran umfassen, die Druckunterschiede auszugleichen vermag. Die Membran kann eine ebene Oberfläche aufweisen. Die Membran kann eine gewellte Oberfläche aufweisen, um selbst kleine Druckunterschiede zwischen Innendruck im Gehäuse und Außendruck ausgleichen zu können.

Ein Stellantrieb wird nach einem weiteren Aspekt der Erfindung wie folgt montiert:
- Einlegen eines ersten Dichtrings in eine umlaufende Nut einer Gehäusehälfte oder Einspritzen eines ersten Dichtrings in eine umlaufende Nut oder Rille einer Gehäusehälfte.
- Optionales Einsetzen einer Membran in eine optional vorgesehene Öffnung einer Gehäusehälfte. Am Außenumfang der Membran kann eine umlaufende Nut vorhanden sein, die dem Verbinden mit der Gehäusehälfte dient. Die Membran muss nicht zwingend vorgesehen sein. Die Membran kann also entfallen, wenn kein Druckausgleich für erforderlich gehalten wird.
- Optionales Einsetzen eines Mikroschalters, der für ein elektrisches Verbinden insbesondere verlötet wird und zwar mit elektrischen Leiterbahnen, die sich im Gehäuse befinden oder in das Gehäuse eingearbeitet sind und die zur Anschlussbuchse des Gehäuses führen. Der Mikroschalter kann außerdem mit einer dafür geeigneten Masse vergossen werden, um den Mikroschalter vor äußeren Einflüssen wie Feuchtigkeit zu schützen. Das Vorsehen eines Mikroschalters ist nur dann erforderlich, wenn die Position des Riegels ermittelt werden soll. Andernfalls kann der Mikroschalter entfallen.
- Einsetzen eines elektrisch antreibbaren Motors in eine Gehäusehälfte, wobei der Motor eine Antriebsspindel oder ein Antriebszahnrad umfasst. Auch der Motor wird mit Leiterbahnen kontaktiert, über die der Motor mit Strom versorgt wird. Grundsätzlich führen diese Leiterbahnen ebenfalls zur genannten Anschlussbuchse.
- Optionales Einbauen einer Federkassette, wobei das Einbauen der Federkassette die Schritte umfasst:
   - Vorspannen der Feder der Federkassette und
   - Einsetzen der Federkassette mit vorgespannter Feder.

Die Feder der Federkassette wird vorgespannt, damit mithilfe der Feder der Riegel von einer Stellung in die andere Stellung allein aufgrund von Federkraft bewegt werden kann. Eine solche Federkassette mit Feder wird insbesondere dann vorgesehen, wenn der Riegel mithilfe einer rampenartigen Schräge ähnlich wie bei einer Falle eines Türschlosses einer Wohnungstür in die nicht verriegelnde Stellung gedrückt werden kann und zwar insbesondere gegen die Federkraft. Die Feder der Federkassette trägt dann dafür Sorge, dass der Riegel in diese verriegelnde Stellung im unbelasteten Zustand bewegt wird. Das Vorsehen einer Federkassette ist allerdings nicht zwingend erforderlich. Eine Federkassette kann also entfallen, wenn der Riegel allein mithilfe des Elektromotors bewegt werden soll.
- Verbinden einer Spindel mit einem Rahmen nebst Riegel.
- Einsetzen der Spindel mit daran angebrachtem Antriebsrad oder Zahnrad nebst Rahmen und Riegel in eine Gehäusehälfte. Das Antriebsrad oder Zahnrad der Spindel kann dann durch die Antriebsspindel oder das Zahnrad des Motors angetrieben werden.
- Einsetzen eines Dichtrings in die Innenseite einer Dichtungsmanschette sowie Einsetzen eines als Flachdichtung ausgestalteten Dichtrings in die Innenseite der Dichtungsmanschette.
- Aufbringen, insbesondere Aufkleben eines Dichtrings auf die Außenseite der Dichtungsmanschette. Ein Aufkleben ist zu bevorzugen, da dann der Dichtring auf der Außenseite zuverlässig angebracht ist.
- Einsetzen eines Innenhebels mit einer damit verbundenen Achse von Innen in eine Gehäusehälfte. Ist der Innenhebel eingesetzt, so reicht die Achse durch die Gehäusehälfte hindurch.
- Optionales Aufsetzen eines Dichtrings auf die Achse des Innenhebels. Der Dichtring ist nur dann erforderlich, wenn der Zugang zum Gehäuse abgedichtet werden soll. Der Dichtring kann bereits aufgesetzt worden sein, bevor der Innenhebel eingesetzt wurde. In einer anderen Ausführungsform wird der Dichtring erst aufgesetzt und zwar von außen, wenn der Innenhebel zuvor eingesetzt worden ist.
- Aufsetzen und Verbinden eines Außenhebels auf die Achse des Innenhebels und zwar insbesondere mittels Formschluss und Einschnappmechanismus. Die Achse des Innenhebels ist dann am entsprechenden Ende so beschaffen, dass ein formschlüssiges Verbinden mit dem Außenhebel möglich ist. Die Achse kann über zum Beispiel zwei biegsame Haken verfügen, die nach innen gedrückt werden, wenn der Außenhebel aufgesetzt wird. Hat der Außenhebel seine Endposition erreicht, so schnappen die Haken zurück. Der Außenhebel ist dann durch eine Einschnappverbindung mit der Achse des Innenhebels fest verbunden.
- Zusammenfügen der beiden Gehäusehälften des Gehäuses.
- Befestigen der Dichtungsmanschette mit den angebrachten Dichtringen auf dem Riegel.
- Verschrauben der beiden Gehäusehälften (3a, 3b).

Ein erstes bevorzugtes Anwendungsgebiet des Stellglieds ist eine Verriegelung eines elektrischen Ladesteckers mit einer elektrischen Ladebuchse für ein Elektrofahrzeug. Mithilfe von Ladestecker und Ladebuchse wird eine Batterie des Elektrofahrzeugs aufgeladen. Dann weist der Riegel des Stellglieds grundsätzlich an einem Ende keine rampenförmige Schräge auf, die ein Zurückdrücken des Riegels in seine verriegelnde Stellung ermöglicht. Der Riegel wird dann allein durch den Antrieb zwischen seiner verriegelnden Stellung und seiner nicht verriegelnden Stellung hin und her bewegt.

Ein zweites bevorzugtes Anwendungsgebiet des Stellglieds ist eine Verriegelung einer Klappe, um mithilfe der Klappe einen Tankstutzen und dergleichen bei einem Kraftfahrzeug zu verdecken. Insbesondere in diesem Fall weist der Riegel eine Rampenform also eine Schräge bei einem entsprechenden Ende auf, die ein Zurückdrücken des Riegels insbesondere gegen eine Federkraft ermöglicht. Im Fall der Abschrägung gibt es daher insbesondere die vorgenannte Federkassette. Diese Federkassette entfällt im Fall der Verriegelung eines Ladesteckers mit einer Ladebuchse.

Insbesondere im Fall der Verriegelung für Ladestecker und Ladebuchse umfasst das Stellglied einen Mikroschalter, mit dem die Stellung des Riegels ermittelt werden kann. Dieser Mikroschalter entfällt grundsätzlich im Fall der Verriegelung einer Klappe.

Nachfolgend werden Ausführungsbeispiele näher erläutert. Hieran werden weitere Ausführungsformen und Vorteile der Erfindung verdeutlicht.

Fig. 1-4 zeigen eine Verriegelungseinrichtung, wobei der Hebel für die Hanbetätigung nicht drebar gelagert ist und gehört deswegen nicht zur Erfindung.

Es zeigen:
- Fig. 1:: Stellantrieb von außen
- Fig. 2:: Stellantrieb von innen
- Fig. 3:: Hebel
- Fig. 4:: Gehäuseschale
- Fig. 5:: Stellantrieb mit Notentriegelungseinrichtung umfassend einen drehbaren Hebel
- Fig. 6:: Führung des Riegels des Stellantriebs
- Fig. 7:: Riegel und U-fömige Feder des Stellantriebs
- Fig. 8:: Mechanismus der Notentriegelungseinrichtung
- Fig. 9:: Riegel mit Rastnase für ein Einrasten in Rastnuten
- Fig. 10:: Schnitt durch den Bereich des Riegels
- Fig. 11:: Fernbetätigung mit Hilfe eines Bowdenzugs
- Fig. 12:: Bauteil mit Falle für Fernbetätigung
- Fig. 13:: Außenansicht eines Karosseriebereichs mit Ladebuchse eines Elektrofahrzeugs
- Fig. 14: Innenansicht eines Karosseriebereichs mit Ladebuchse eines Elektrofahrzeugs
- Figur 15:: Ladestecker und Ladebuchse
- Figur 16:: Ladestecker und Ladebuchse in vollständig verbundenem Zustand
- Figur 17:: Ladebuchse
- Figur 18:: Ladestecker

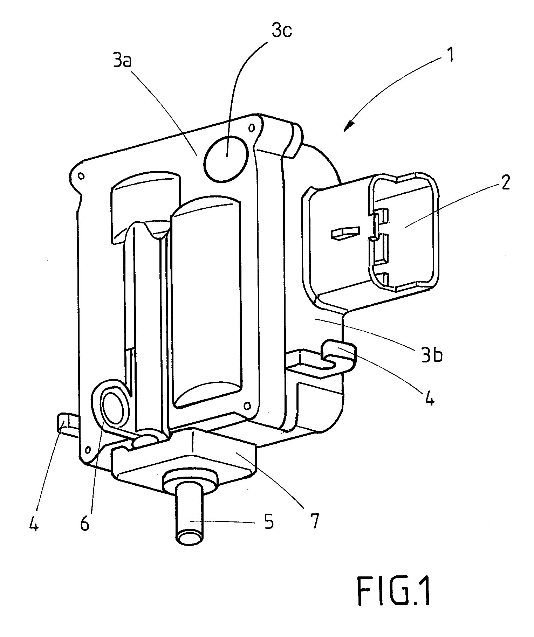

Figur 1 zeigt einen Stellantrieb 1 mit einer Anschlussbuchse 2, über die der Stellantrieb an eine elektrische Stromquelle angeschlossen werden kann. Der eigentliche Antrieb für den Riegel ist im Inneren des Gehäuses untergebracht. Das Gehäuse besteht aus zwei Halbschalen 3a und 3b, die mit vier Schrauben miteinander verbunden werden. Zwischen den beiden Halbschalen 3a und 3b befindet sich eine zum Beispiel aus Gummi oder einem anderen elastischen Material bestehende, vorzugsweise schnurförmige Dichtung, um die beiden Halbschalen 3a und 3b staub- und feuchtigkeitsdicht miteinander zu verbinden. Eine dehnbare Membran 3c kann Teil der Halbschale 3a sein, um Druckunterschiede kompensieren zu können. Die Membran besteht aus dehnbarem Material. Sollen auch sehr geringe Druckunterschiede ausgeglichen werden können, so umfasst die aus flexiblem Material bestehende Membran 3c wenigstens einen ringförmig verlaufenden Wellenberg und/oder wenigstens einem ringförmig verlaufendes Wellental. Bevorzugt gibt es mehrere, ringförmig verlaufende Wellentäler und Wellenberge.

Das Gehäuse 3a, 3b umfasst zwei an gegenüberliegenden Wänden des Gehäuses angebrachte, vorstehende Laschen 4, die U-förmig gebogen sind. Die Laschen 4 dienen der Befestigung des Stellantriebs 1 zum Beispiel mit Hilfe von Schrauben an einem weiteren Bauteil wie zum Beispiel an einer Ladebuchse eines Kraftfahrzeugs, über die eine Batterie eines elektrisch angetriebenen Kraftfahrzeugs aufgeladen werden kann. Der Stellantrieb 1 umfasst einen Riegel 5, der durch einen im Gehäuse 3a, 3b befindlichen Elektromotor linear verfahren werden kann. Aus einer seitlichen Wand des Gehäuses 3a, 3b ragt eine Öse 6 eines Hebels hervor, mit dessen Hilfe der Riegel 5 ausgehend von seiner gegenüber dem Gehäuse 3a, 3b vorstehenden, verriegelnden Stellung mechanisch zurück in Richtung des Gehäuses 2 bewegt werden kann. Die Öse 6 kann leicht erfasst und handbetätigt bewegt werden, so zum Beispiel mittelbar mit Hilfe eines Bowdenzugs, der in der Öse 6 in dafür geeigneter Weise eingehängt ist.

Der Hub des Riegels beträgt in einem Ausführungsbeispiel wenigstens 10 mm, um besonders zuverlässig und sicher mit Hilfe des Riegels ein gewünschtes Bauteil wie zum Beispiel eine Tankklappe oder eine Verbindung zwischen einem Ladestecker und einer Ladebuchse verriegeln zu können.

Um den Riegel 5 herum verläuft eine von außen auf das Gehäuse 3a, 3b gesetzte Dichtungsmanschette 7, die dicht gegen ein Bauteil gepresst wird, an dem der Stellantrieb befestigt wird. Diese Dichtungsmanschette trägt dazu bei, dass in den Innenraum des Stellantriebs kein Staub und keine Feuchtigkeit gelangen kann, so dass einschlägige Normen und zwar insbesondere auch die Norm IP67 erfüllt werden können. Die Dichtungsmanschette vergrößert außerdem aufgrund ihrer flachen Form praktisch nicht den benötigten Bauraum.

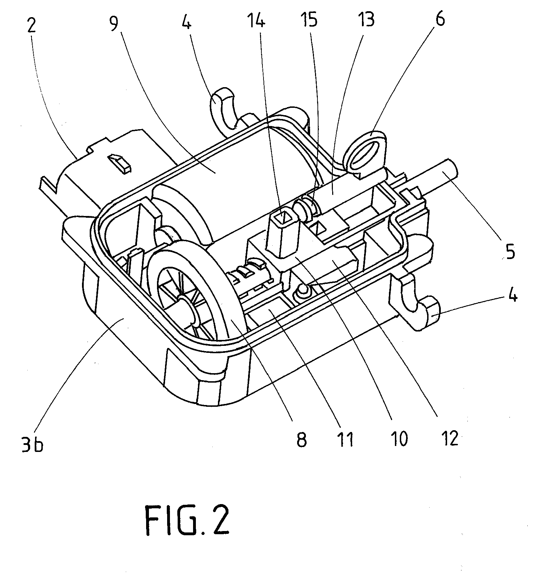

Figur 2 stellt den Stellantrieb aus Figur 1 ohne die Gehäusehälfte bzw. Gehäuseschale 3a dar. Wie bereits aus der DE 102 59 465 A1 bekannt, kann eine darin befindliche Gewindespindel 8 mit einem darin befindlichen Elektromotor 9 angetrieben werden. Eine Drehbewegung der Spindel bewirkt eine translatorische, also lineare Bewegung des Schlittens 10. Benachbart zum Gewinde der Spindel ist ein Sensor und zwar ein Mikroschalter 11 angeordnet. Am Schlitten 10 ist eine Rampe 12 angebracht. Durch eine translatorische Bewegung des Schlittens 10 wird der Mikroschalter durch die Rampe 12 betätigt und so die Stellung des Schlittens 10 und folglich auch die Stellung des damit verbundenen Riegels 5 detektiert. Im dargestellten Beispiel ist die Rampe so angeordnet, dass der Mikroschalter 11 betätigt wird, wenn der Riegel 5 aus seiner verriegelnden Stellung heraus, also zurück in das Gehäuse 3a, 3b bewegt wird.

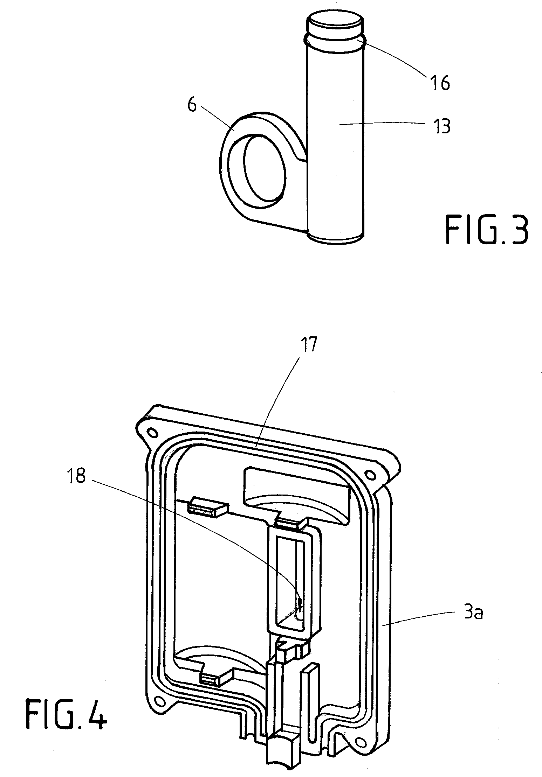

Eine oder beide Gehäusehälften 3a und 3b stellen einen Kanal bereit, durch den der Bolzen 13 des Hebels mit der Öse 6 geführt wird. Das Ende des Bolzens 13, das der Öse 6 gegenüberliegt, vermag bei einer entsprechenden Bewegung gegen einen Vorsprung 14 des Schlittens 10 zu drücken und diesen so zurück zu bewegen, dass der mit dem Schlitten verbundene Riegel 5 aus seiner verriegelnden Stellung heraus bewegt wird. Benachbart zu diesem Ende des Bolzens 13 gibt es eine umlaufende Rille 15, in der sich ein Dichtring 16 - wie in Figur 3 gezeigt - befindet. Der Dichtring 16 sorgt für eine feuchtigkeitsdichte und staubdichte Verbindung zu der angrenzenden umlaufenden Kanalwand hin. Bei Bedarf können auch mehrere, hinter einander angeordnete Dichtringe für den Bolzen vorgesehen sein.

Wie die Figur 4 verdeutlicht, verfügt die Gehäusehälfte 3a über eine innenliegende umlaufende Rille 17, in die eine insbesondere elastische Dichtungsschnur eingelegt wird. Entlang dieser Schnur gibt es dann eine feuchtigkeits- und staubdichte Verbindung zwischen den beiden Gehäusehälften 3a und 3b. Die Gehäusehälfte 3a verfügt außerdem über eine kanalförmige Bohrung 18 zur Führung des Bolzens 13.

Es gelingt so, einen Stellantrieb bereitzustellen, der lediglich 60 mm lang ist, wenn sich der Riegel im Gehäuse befindet, und der sogar noch kürzer sein kann. Wird der Riegel 5 aus dem Gehäuse heraus in seine verriegelnde Stellung bewegt, so verlängert sich die Länge um 10 mm. Ohne den elektrischen Anschluss 2 beträgt die maximal erforderliche Breite 47 mm. Die Öse 6 nicht mit einbezogen, beträgt die Dicke nicht mehr als 30 mm.

Die Spindel des Stellantriebs kann in der aus der Druckschrift DE 102 59 465 A1 bekannten Weise mit einer geeignet vorgespannten Feder verbunden sein, die die Spindel so zu drehen vermag, dass der Riegel hierdurch in eine gewünschte Richtung bewegt werden kann.

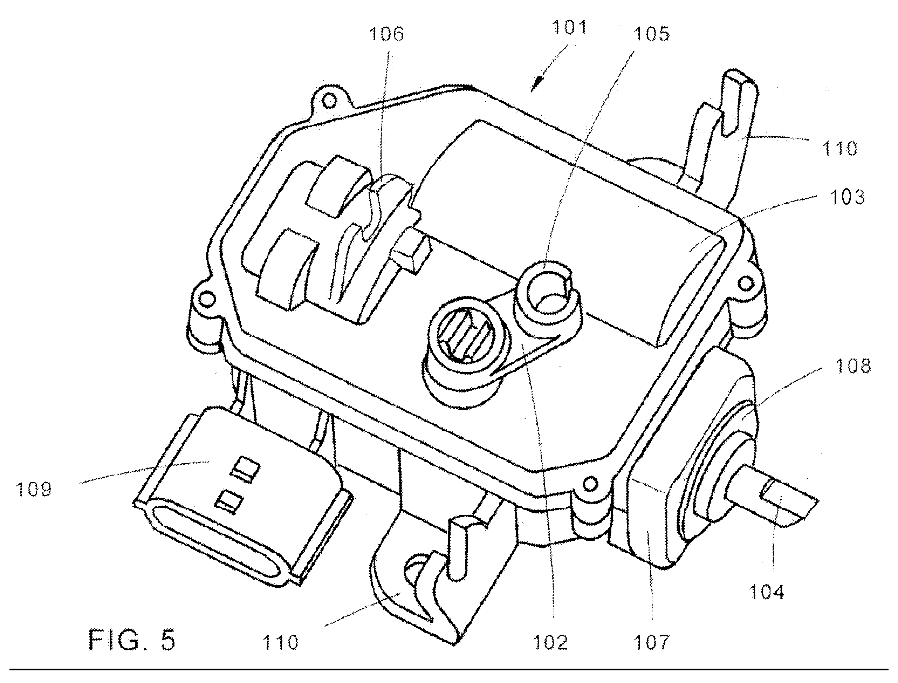

Die Figur 5 zeigt einen Stellantrieb 101 mit einem drehbaren Hebel 102, der außerhalb des Gehäuses 103 des Stellantriebs 101 angeordnet ist. Der Stellantrieb 101 umfasst einen Riegel 104, der in der Figur 5 in seiner verriegelnden Stellung gezeigt wird. In der verriegelnden Stellung reicht der Riegel 104 aus dem Gehäuse 103 heraus. Wird der drehbare Hebel 102 entgegengesetzt zum Uhrzeigersinn gedreht, so wird aufgrund einer mechanischen Verbindung der Riegel 104 in Richtung des Gehäuses 103 und damit in Richtung seiner Endstellung bewegt. Der Hebel 102 umfasst eine Öse 105, in die das Ende eines Bowdenzugs eingehängt werden kann. Darüber hinaus gibt es auf der gleichen Oberfläche des Gehäuses 103 eine Einhängung 106, um hier die äußere Hülle eines Bowdenzugs geeignet einhängen zu können. Mithilfe des eingehängten Bowdenzugs kann dann der Hebel 102 fernbetätigt entgegengesetzt zur Uhrzeigerrichtung gedreht werden, um beispielsweise die Notentriegelungseinrichtung von dem Inneren eines Fahrzeugs betätigen zu können.

Das Gehäuse 103 ist ferner beim Riegel 104 mit einer flachen Dichtungsmanschette 107 versehen. Zusätzlich kann noch ein Dichtring 108 vorgesehen sein, um das Stellglied besonders zuverlässig dicht gegen eine Wand eines weiteren Bauteils pressen zu können.

Das Stellglied 101 umfasst eine Buchse 109 mit darin befindlichen elektrischen Kontakten, um diesen mit einem elektrischen Stecker verbinden zu können. Hierüber wird der Stellantrieb 101 und zwar insbesondere der Antrieb sowie - soweit vorhanden - elektrische oder elektronische Sensoren mit Strom versorgt, um den Riegel 104 mithilfe eines elektrischen Antriebs bewegen und gegebenenfalls Sensoren mit Strom versorgen zu können und/ oder Signale der Sensoren weiter leiten zu können. Um den Stellantrieb 101 befestigen zu können, umfasst das Gehäuse 103 seitlich abstehende Laschen 110. Eine Wand der Lasche 110 ist parallel zur Grundfläche des Gehäuses 103 des Stellantriebs 101 angeordnet. Hieran grenzt eine senkrechte Wand an, die senkrecht zu der Grundfläche des Gehäuses 103 verläuft. Beide Wände der Laschen 110 umfassen eine Ausnehmung oder Bohrung, um beispielsweise mithilfe einer Schraubverbindung den Stellantrieb an einem weiteren Bauelement befestigen zu können, und zwar in unterschiedlichen Stellungen in Abhängigkeit von der jeweiligen Anforderung.

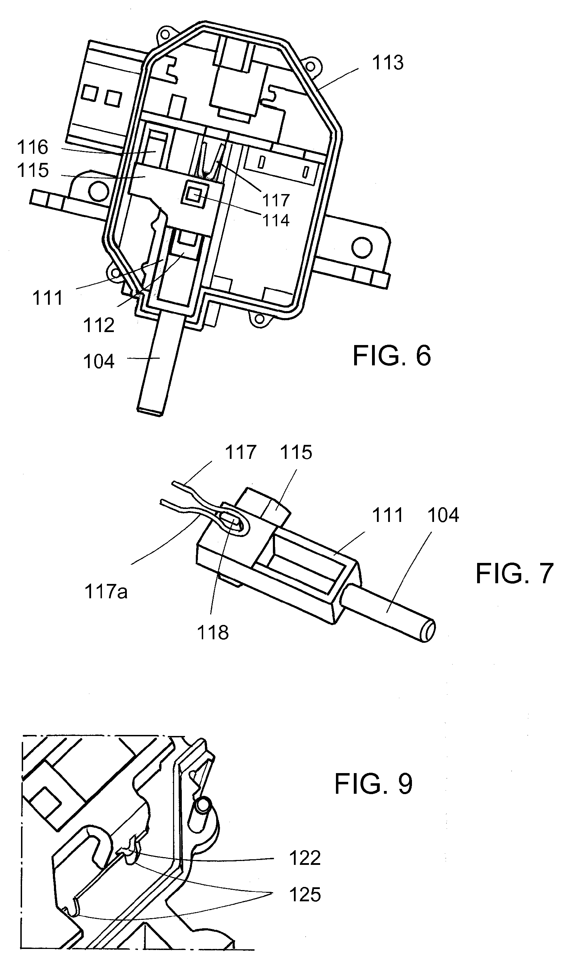

In der Figur 6 wird die Führung des Riegels 104 innerhalb des Gehäuses verdeutlicht. Der Bereich des Riegels 104, der aus dem Gehäuse herausgefahren werden kann, ist mit einem rechteckigen Rahmen 111 verbunden. Innerhalb des Rahmens 111 befindet sich ein Führungselement 112 des Gehäuses bzw. der Gehäusehälfte 113. Das Ende des Rahmens 111, welches dem vorstehenden Teil des Riegels 104 entgegengesetzt angeordnet ist, umfasst einen senkrecht in der Figur 6 nach oben abstehenden Bolzen 114 sowie einen seitlich abstehenden Arm 115 mit rampenförmiger Unterseite. In Abhängigkeit von der Stellung des Riegels 104 betätigt der seitliche Arm 115 einen Mikroschalter 116. Durch den Mikroschalter 116 kann die Stellung des Riegels 104 elektronisch erfasst werden.

In dem Bereich, der der Führung des Riegels 104 dient, gibt es eine U-förmig gebogene Feder bzw. einen U-förmig gebogenen, sich elastisch verhaltenen Draht 117. Die Schenkel des Drahtes 117 sind nach innen eingebeult. Das Zusammenspiel zwischen dem Riegel 104 und der Feder 117 wird in der Figur 7 dargestellt.

In dieser Figur 7 wird verdeutlicht, dass es einen weiteren Bolzen 118 des Riegels 104 gibt, der in Richtung Feder 117 absteht und der zwischen die Schenkel der Feder 117 hineinreicht. Wird der Riegel 104 von seiner Ausgangsstellung in die verriegelnde Stellung bewegt oder umgekehrt, so muss der Bolzen 118 die durch Ausbeulung bzw. Einbuchtung 117a bereitgestellte Verengung der Feder 117 gegen eine Federkraft auseinanderbiegen, um zur jeweils anderen Stellung zu gelangen. Durch die Feder 117 wird der Riegel also in der jeweiligen Stellung (Ausgangsstellung oder verriegelnde Stellung) gehalten. Eine merkliche Bewegung des Riegels aufgrund eines Rückpralleffekts wird durch die Feder 117 vermieden.

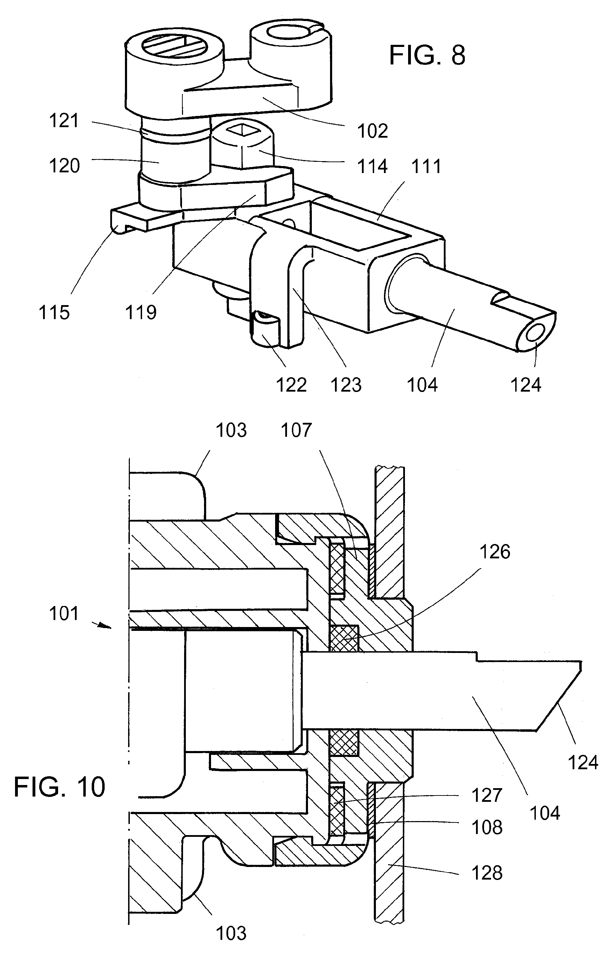

In der Figur 8 wird gezeigt, auf welche Weise mithilfe des drehbaren Außenhebels 102 der Riegel 104 von der verriegelnden Stellung in die Ausgangsstellung bewegt werden kann. Zu diesem Zweck ist der Außenhebel 102 über eine Achse 120 mit einem Innenhebel 119 verbunden. Der Innenhebel 119 liegt an dem vorstehenden Bolzen 114 des Riegels 104 an. Wird der Außenhebel 102 entgegengesetzt zur Uhrzeigerrichtung wie beschrieben verdreht, so überträgt sich diese Drehbewegung auf den Innenhebel 119. Der Innenhebel 119 erfasst den Bolzen 114 und bewegt diesen somit zusammen mit dem Riegel 104 in die Ausgangsstellung. Die Achse 120, die den Innenhebef 119 mit dem Außenhebel 102 verbindet, umfasst einen Dichtring 121. Mithilfe des Dichtrings 121 wird erreicht, dass die Achse 120 staubdicht und feuchtigkeitsdicht gegenüber dem Gehäuse des Stellantriebs abgedichtet wird, sodass entlang dieser Achse 120 kein Staub und keine Feuchtigkeit in das Innere des Gehäuses 103 des Stellglieds 101 gelangen kann.

Die in der Figur 8 gezeigte Ausführungsform des Riegels 104 umfasst eine Rastnase 122, die über einen Arm 123 federnd an dem Rahmen 111 angebracht ist. Der in der verriegelnden Stellung gegenüber dem Gehäuse 103 vorstehende Bereich des Riegels 104 ist an seinem Ende mit einer Schräge 124 versehen, die wie eine Schräge einer Falle eines Schlosses zu wirken vermag.

In der Figur 9 wird die Funktionsweise des federnden Arms 123 mit der daran befestigten Rastnase 122 verdeutlicht. Die Rastnase 122 kann in eine Ausnehmung bzw. Rastnut 125 einrasten und zwar in der Ausgangsstellung sowie in der verriegelnden Stellung. Diese Rastverbindung trägt ergänzend dafür Sorge, dass der Riegel 104 sehr zuverlässig in seiner verriegelnden Stellung bzw. in seiner Ausgangsstellung gehalten wird. Rückpralleffekte werden so vermieden.

Die Figur 10 zeigt einen Schnitt durch den Bereich des Riegels 104, der der Verriegelung dient. Innerhalb der Dichtungsmanschette 107 kann es demnach ein oder zwei weitere Dichtringe 126 und 127 geben. Insbesondere gibt es zwei Ringe, die vorzugsweise eine unterschiedliche Härte aufweisen, um bei geeigneter Wahl besonders zuverlässig abdichten zu können. Der Dichtring 126 grenzt - vorzugsweise staub- und feuchtigkeitsdicht - an den Riegel 104 an und sorgt so für eine dichte Verbindung zwischen dem Gehäuse 103 und dem Riegel 104 in diesem Bereich. Der weitere Dichtring 127 trägt zu einer dichten Verbindung zwischen der Dichtungsmanschette 107 und dem Gehäuse 103 bei und zwar insbesondere dann, wenn die Dichtungsmanschette gegen eine Wand 128 eines weiteren Bauteils gepresst wird. Es wird so darüber hinaus zwischen der Wand 128 und dem angrenzenden Bereich des Riegels 104 besonders zuverlässig eine staub- und feuchtigkeitsdichte Verbindung geschaffen.

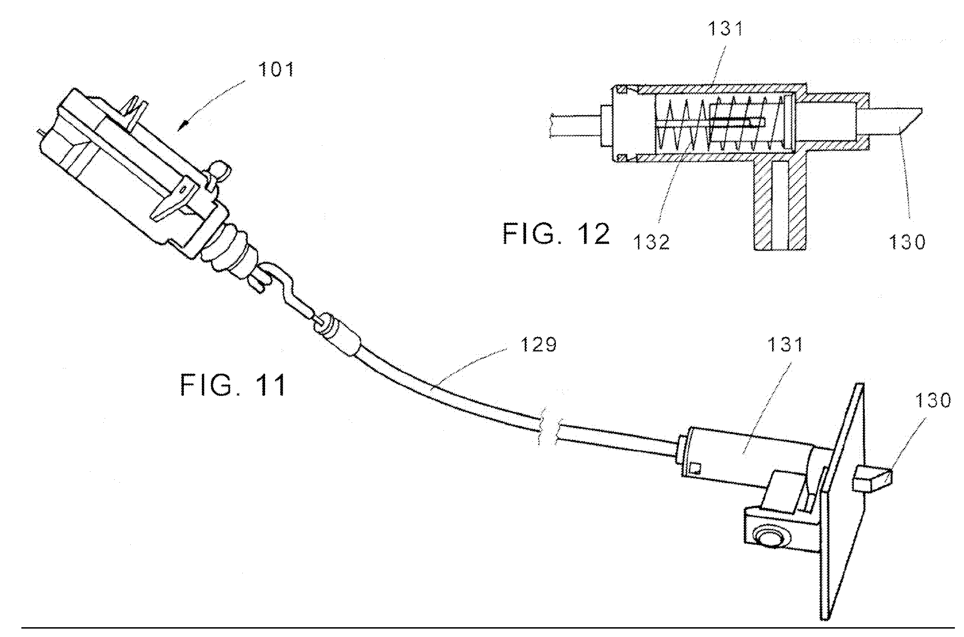

Figur 11 zeigt eine Verwendung des Stellantriebs, mit dem über einen Bowdenzug eine Falle 130 fernbetätigt wird. Ein hakenförmiges, am Seilzug des Bowdenzugs angebrachtes Ende wird einerseits in eine Öse des Riegels eines Stellantriebs 101 eingehängt. Andererseits wird das andere Ende des Seilzugs in eine entsprechende Halterung der Falle 130 eingehängt, wie die Figur 12 zeigt.

Die Figur 12 zeigt einen Schnitt durch ein Bauteil 131, welches die Falle 130 umfasst. Mithilfe einer Feder 132 wird die Falle 130 in die verriegelnde Stellung bewegt und in dieser Stellung gehalten. Mithilfe des Bowdenzugs 129 kann die Falle 130 von der verriegelnden Stellung in das Bauteil 131 hinein bewegt werden, um anschließend beispielsweise eine Klappe oder eine Verbindung zwischen einer Ladebuchse und einem Ladestecker lösen zu können.

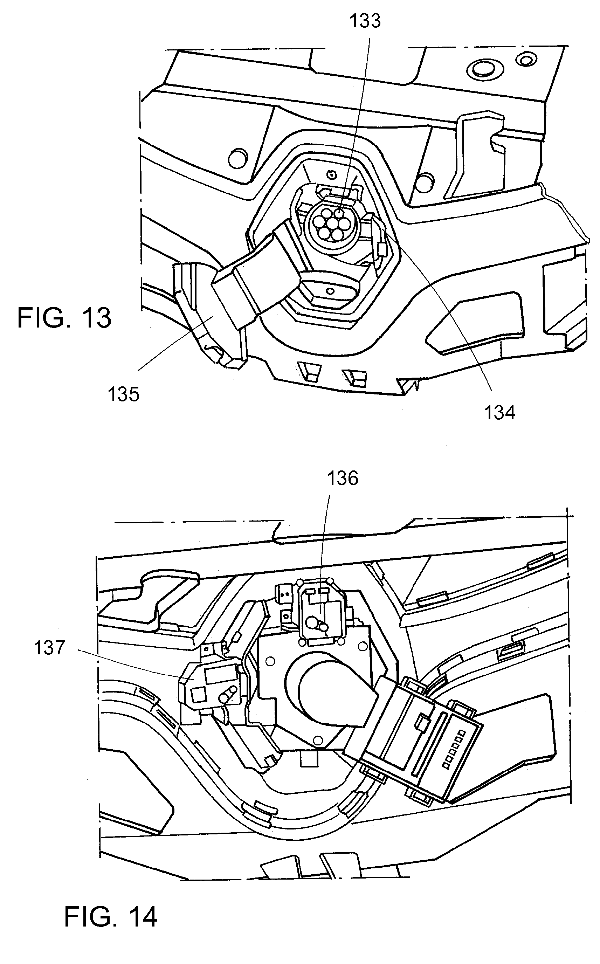

In der Figur 13 wird eine Ladebuchse 133 eines Elektrofahrzeugs von außen gezeigt, welches mithilfe eines Elektromotors angetrieben werden kann. Über die Ladebuchse 133 kann eine Batterie aufgeladen werden, von der der Elektromotor des Elektrofahrzeugs seinen Strom bezieht.

Die Ladebuchse kann zunächst mit einer Klappe 134 feuchtigkeits- und staubdicht verschlossen werden. Darüber hinaus gibt es eine Klappe 135, die den Bereich der Karosserie zu verschließen vermag, indem sich die Ladebuchse 133 befindet.

In der Figur 14 wird der Bereich aus der Figur 13 von der Innenseite gezeigt. Es gibt zwei Stellantriebe 136 und 137. Der Stellantrieb 136 dient dem Verriegeln einer Verbindung zwischen Ladebuchse und Ladestecker. Der Stellantrieb 137 dient dem Verriegeln einer Klappe, so zum Beispiel der Klappe 135, um einen unbefugten Zugang zur Ladebuchse 133 zu verhindern.

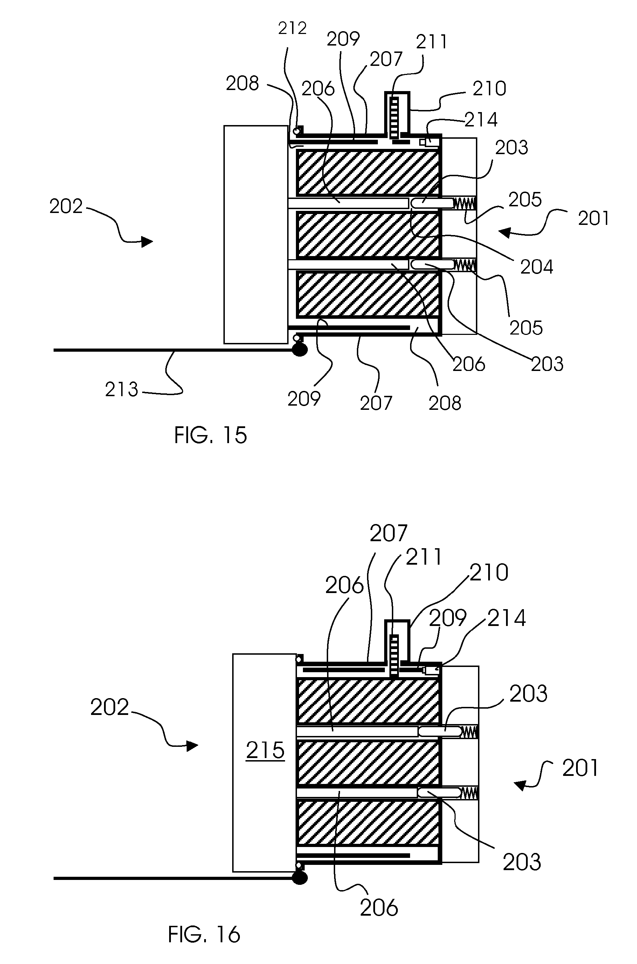

Figur 15 zeigt einen Schnitt durch eine Ladebuchse 201 und einen Ladestecker 202. Der Ladestecker 202 ist noch nicht vollständig in die Ladebuchse 201 hineingeschoben worden. Die Ladebuchse 201 ist mit federnd gelagerten elektrischen Kontakten 203 versehen, die sich in Ausnehmungen 204 befinden. Gezeigt werden zwei Ausnehmungen. Am Grund einer jeden hohlzylinderförmigen Ausnehmung befindet sich ein elektrisch leitfähiger Kontakt, der gegen eine vorgespannte Feder 205 weiter in Richtung Grund gedrückt werden kann.

Da der Ladestecker 202 noch nicht vollständig in die Buchse geschoben worden ist, berühren seine Kontakte 206 noch nicht die Kontakte 203 der Ladebuchse. Um die Ausnehmungen 204 herum verläuft eine seitliche Wand 207 der Ladebuchse, so dass ein umlaufender Spalt 208 verbleibt. In diesen zylinderförmig verlaufenden Spalt 208 wird eine dazu korrespondierende seitliche, zylinderförmig umlaufende Wand 209 des Ladesteckers 202 hineingeschoben, um den Ladestecker 202 mit der Ladebuchse 201 zu verbinden.

An der seitlichen Wand 207 ist an einer Stelle ein Stellglied 210 angebracht, das einen Riegel 211 umfasst. Das Stellglied 210 umfasst einen nicht dargestellten Motor, mit dessen Hilfe der Riegel 211 bewegt wird. Eine Rotationsbewegung des Motors wird dann zum Beispiel mit Hilfe einer nicht dargestellten Spindel in eine translatorische Bewegung umgesetzt. Das Stellglied 210 kann außerdem ebenfalls einen Sensor, also zum Beispiel einen Mikroschalter umfassen, mit dem die Stellung des Riegels 211 detektiert werden kann. Mit Hilfe eines solchen Sensors kann also festgestellt und signalisiert werden, ob sich der Riegel 211 in seiner verriegelnden Stellung befindet oder nicht.

Zwischen dem Gehäuse des Stellglieds 210 und der angrenzenden Wand 207 der Ladebuchse befindet sich eine nicht dargestellte Dichtungsmanschette, die dicht an den Riegel 211 heranreicht. Durch die beiden Wände hindurch kann aufgrund dieser Dichtungsmanschette kein Staub und keine Feuchtigkeit von außen zum Riegel 211 des Stellglieds 210 gelangen.

Am oberen Rand der seitlichen, umlaufenden Wand 207 gibt es eine umlaufende Rille, in die ein aus elastischem Kautschuk bestehender Dichtring 212 hineingedrückt ist. Es können weitere Dichtringe vorhanden sein, die um die Öffnungen der Ausnehmungen 204 herum verlaufen. An der Buchse 201 ist ein Klappdeckel 213 angebracht, mit dem die Öffnung der Ladebuchse 201 verschlossen werden kann.

Am dem Grund des Spalts 208 sind ein oder mehrere Mikroschalter 214 angebracht. Ein solcher Mikroschalter kann aber auch zum Beispiel nahe des Grundes durch die seitliche Wand 207 in den Spalt 208 hineinreichen.

Figur 16 zeigt die Situation, wenn der Ladestecker 202 vollständig in die Ladebuchse 201 hineingeschoben worden ist. Die Kontakte 206 des Ladesteckers 202 drücken nun die Kontakte 203 der Ladebuchse 201 in Richtung Grund gegen die Federkraft. Die seitliche Wand 209 betätigt nun den Mikroschalter 14. Der betätigte Mikroschalter 214 bewirkt, dass das Stellglied den Riegel 211 durch eine Öffnung in der seitlichen Wand 207 der Ladebuchse hindurch bewegt hat. Wurde der Mikroschalter 214 durch den Ladestecker betätigt, so fluchtet mit der Öffnung in der seitlichen Wand 207 eine Öffnung in der seitlichen, äußeren Wand 209. Der Riegel wird auch durch diese weitere Öffnung hindurch geschoben. Damit ist die Verbindung zwischen dem Ladestecker und der Ladebuchse verriegelt worden. Ein tellerförmiger Bereich 215 des Ladesteckers ist dann gegen den Dichtring 212 der Ladebuchse gedrückt, so dass dadurch die Ladebuchse staub- und feuchtigkeitsdicht verschlossen wird. Gibt es weitere Dichtringe (ergänzend oder alternativ), die um die Öffnungen der genannten Ausnehmungen herum verlaufen, so können diese ergänzend oder alternativ dazu beitragen, dass die Ausnehmungen staub- und feuchtigkeitsdicht verschlossen sind.

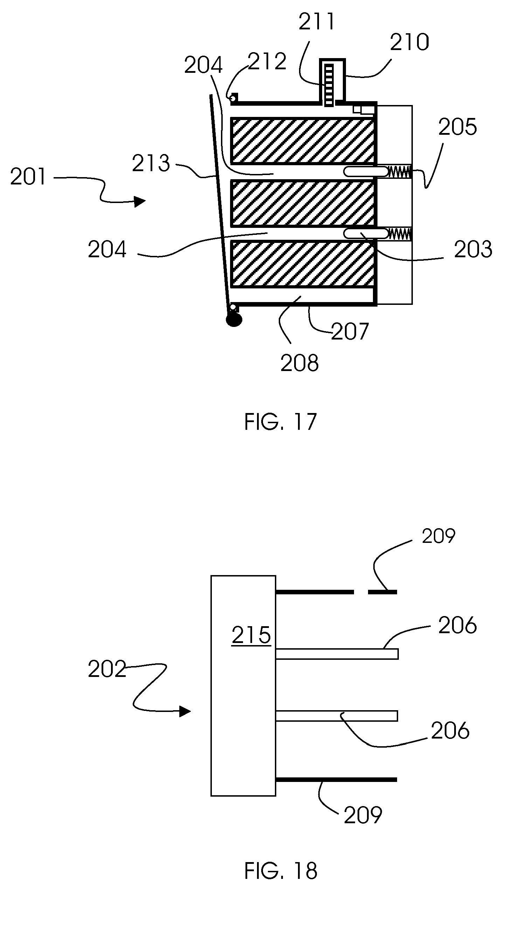

In der Figur 17 wird die Ladebuchse 201 mit Deckel 213 dargestellt, der den inneren Bereich der Ladebuchse 201 staub- und feuchtigkeitsdicht verschließen kann. Verschließt der Deckel 213 die Ladebuchse, so drückt der Deckel 213 ebenfalls gegen den oder die vorhandenen Dichtringe 212. Der Deckel 213 kann ebenfalls ein Wandelement oder eine Lasche aufweisen, welches bzw. welche im geschlossenen Zustand des Deckels in den Spalt 208 im Bereich des Riegels 211 hineinreicht, um so mit Hilfe einer entsprechenden Öffnung oder Ausnehmung durch den Riegel 211 verriegelt zu werden. Dieses Wandelement bzw. diese Lasche kann das Verriegeln ebenfalls durch Betätigen eines Sensors 214 auslösen.

Auch die elektrischen Kontakte 206 des Ladesteckers 202 können ergänzend oder alternativ federnd gelagert sein. Zweckmäßig befinden sich die Kontakte 206 des Ladesteckers 202 ebenfalls in zusätzlichen beispielsweise zylinderförmigen Ausnehmungen, um so verbessert vor einer zufälligen Berührung zu schützen.

In der Figur 18 wird der Ladestecker 202 einzeln dargestellt, um seinen Aufbau verbessert zu verdeutlichen.

### Bezugszeichenliste:

- 1: Stellantrieb
- 2: Anschlussbuchse
- 3a, 3b: Halbschalen
- 3c: Membran
- 4: Laschen
- 5: Riegel
- 6: Öse
- 7: Dichtungsmanschette
- 8: Gewindespindel
- 9: Elektromotor
- 10: Schlittens
- 11: Mikroschalter
- 12: Rampe
- 13: Bolzen
- 14: Vorsprung
- 15: Rille
- 16: Dichtring
- 17: Rille
- 18: Bohrung
- 101: Stellantrieb
- 102: drehbarer Außenhebel
- 103: Gehäuse
- 104: Riegel
- 105: Öse
- 106: Einhängung
- 107: Dichtungsmanschette
- 108: Dichtring
- 109: elektrischer Anschluss
- 110: Laschen
- 111: Rahmen
- 112: Führungselement
- 113: Gehäusehälfte
- 114: Bolzen
- 115: Arm
- 116: Mikroschalter
- 117: U-förmiger Draht oder Feder
- 117a: Einbuchtung / Ausbeulung
- 118: Bolzen
- 119: Innenhebel
- 120: Achse
- 121: Dichtring
- 122: Rastnase
- 123: federnder Arm
- 124: Schräge
- 125: Rastausnehmungen
- 126: Dichtring
- 127: Dichtring
- 128: Wand eines weiteren Bauelements
- 129: Bowdenzug
- 130: Falle
- 131: Bauteil
- 132: Feder
- 133: Ladebuchse
- 134: Klappe mit kleiner Grundfläche
- 135: Klappe mit großer Grundfläche
- 136: Stellantrieb
- 137: Stellantrieb
- 201:: Ladebuchse
- 202:: Ladestecker
- 203:: elektrische Kontakte
- 204:: Ausnehmungen
- 205:: vorgespannte Feder
- 206:: elektrische Kontakte
- 207:: seitliche Wand
- 208:: umlaufender Spalt
- 209:: zylinderförmig umlaufende Wand
- 210:: Stellglied
- 211:: Riegel
- 212:: Dichtring
- 213:: Klappdeckel
- 214:: Mikroschalter
- 215:: tellerförmiger Bereich des Ladesteckers

## Patentansprüche

1. Verriegelungseinrichtung für ein Kraftfahrzeug umfassend einen Stellantrieb bzw. ein Stellglied (1, 210) mit wenigstens einem elektrisch bewegbaren Riegel (5, 104, 211) für das Verriegeln eines ersten Bauteils, welches eine erste Gehäusewand (207) aufweist, nämlich eine Ladebuchse eines Elektrofahrzeugs, mit einem zweiten Bauteil (201) mit einer zweiten Gehäusewand (209), nämlich eines Ladesteckers für ein Elektrofahrzeug, wobei die zweite Gehäusewand in eine Öffnung der ersten Gehäusewand hineingeschoben wird, wobei der Stellantrieb (1, 210) mit dem Riegel (5, 104, 211) an der Gehäusewand (207) des ersten Bauteils angebracht ist, wobei der Riegel (5, 104, 211) zur Verriegelung durch den Stellantrieb durch ein Loch in der ersten Gehäusewand hindurch geschoben werden kann und zwar in ein Loch oder in eine Ausnehmung in der zweiten Gehäusewand, wobei der Stellantrieb einen Hebel (102, 119) umfasst, mit dem der Riegel (5, 104, 211) handbetätigt aus seiner verriegelnden Stellung mechanisch heraus bewegt werden kann und zwar in seine nicht verriegelnde Ausgangsstellung, **dadurch gekennzeichnet, dass** der Stellantrieb einen drehbar gelagerten Hebel (102, 119) umfasst, mit dem der Riegel (5, 104,211) handbetätigt durch eine Drehbewegung aus seiner verriegelnden Stellung mechanisch heraus bewegt werden kann, dass der Riegel (5, 104, 211) mit einer Rampe (12) verbunden ist, mit der ein Sensor (11) betätigt werden kann, wobei eine Raste, insbesondere eine Rastnase (122) für ein Verrasten des Riegels (5, 104, 211) in seiner Ausgangsstellung und in seiner verriegelnden Stellung vorhanden ist sowie mit einer elastischen Einschnürung (117a) und einem Bolzen (118) des Riegel (5, 104, 211), der durch die Einschnürung (117a) hindurch bewegt wird, wenn der Riegel (5, 104, 211) von der Ausgangsstellung in die verriegelnde Stellung gelangt oder umgekehrt, mit einer an dem Gehäuse (3a, 3b) des Stellantriebs (1) sowie an dem Riegel (5, 104, 211) anliegenden Dichtungsmanschette (7), wobei das Gehäuse (3a, 3b) des Stellantriebs (1, 210) darüber hinaus staub- und feuchtigkeitsdicht verschlossen ist, wobei die Dichtungsmanschette (7) gegen die Wand des zweiten Bauteils gepresst ist, durch welche der Riegel (5, 104, 211) in seiner verriegelnden Stellung hindurch reicht, wobei der Raum des zweiten Bauteils, in feuchtigkeitsdicht verschlossen ist oder staub- und feuchtigkeitsdicht verschließbar eingerichtet ist.

2. Verriegelungseinrichtung nach Anspruch 1, bei dem der drehbare Hebel (102, 119) ein Griffelement oder eine Öse (105) umfasst, die sich außerhalb des Gehäuses (103) des Stellantriebs (101) befindet.

3. Verriegelungseinrichtung nach einem der vorhergehenden Ansprüche, bei dem eine mit dem drehbaren Hebel (102, 119) verbundene Achse (120) wenigstens einen umlaufenden Dichtring (121) umfasst.

4. Verriegelungseinrichtung nach einem der vorhergehenden Ansprüche, bei dem der Stellantrieb (101) über einen Sensor (116) verfügt, mit dem die Stellung des Riegels (104) detektiert werden kann.

5. Verriegelungseinrichtung nach dem vorhergehenden Anspruch, bei dem der Riegel (105) mit einem Arm (115) verbunden ist, mit dem der Sensor (116) betätigt werden kann.

6. Verriegelungseinrichtung nach einem der vorhergehenden Ansprüche umfassend eine Spindel (8), mittels der eine Drehbewegung des Elektromotors (9) in eine lineare Bewegung des Riegels (5) umgewandelt werden kann.

7. Verfahren für die Herstellung eines Stellantriebs (1) nach einem der vorhergehenden Ansprüche 1 bis 6 mit folgenden Schritten:
Einlegen eines ersten Dichtrings in eine umlaufende Nut einer Gehäusehälfte oder Einspritzen eines ersten Dichtrings in eine umlaufende Nut oder Rille (17) einer Gehäusehälfte (3a),
optionales Einsetzen einer Membran (3c) in eine Öffnung einer Gehäusehälfte (3a),
optionales Einsetzen eines Mikroschalters (116), der verlötet und/oder vergossen wird, wobei der Mikroschalter (116) mit Leiterbahnen elektrisch verbunden wird, die sich im Gehäuse (3a, 3b) befinden, wobei die Leiterbahnen zur Anschlussbuchse (2) des Gehäuses (3a, 3b) führen,
Einsetzen eines Motors (9) des Stellantriebes in eine Gehäusehälfte (3b), wobei der Motor eine Antriebsspindel oder ein Antriebszahnrad umfasst,
optionales Einbauen einer Federkassette, wobei das Einbauen der Federkassette die Schritte umfasst:
• Vorspannen der Feder der Federkassette und
• Einsetzen der Federkassette mit vorgespannter Feder,
Verbinden einer Spindel (8) mit einem Rahmen (111) nebst Riegel (104), Einsetzen der Spindel (8) mit daran angebrachtem Antriebsrad oder Zahnrad, welches durch die Antriebsspindel oder das Zahnrad des Motors (9) angetrieben werden kann, nebst Rahmen (111) und Riegel (104),
Einsetzen eines Dichtrings (126) in die Innenseite einer Dichtungsmanschette (107) sowie Einsetzen eines als Flachdichtung ausgestalteten Dichtrings (127) in die Innenseite der Dichtungsmanschette (107),
Aufkleben eines Dichtrings (108) auf die Außenseite der Dichtungsmanschette (107);
Einsetzen eines Innenhebels (119) mit damit verbundener Achse (120) von Innen in eine Gehäusehälfte (3a);
Optionales Aufsetzen eines Dichtrings (121) auf die Achse (120) des Innenhebels;
Aufsetzen und Verbinden eines Außenhebels (102) auf die Achse und zwar insbesondere mittels Formschluss und Einschnappmechanismus;
Zusammenfügen der beiden Gehäusehälften (3a, 3b);
Befestigen der Dichtungsmanschette (107) mit den angebrachten Dichtringen (126, 127, 108) auf den Riegel (104);
Verschrauben der beiden Gehäusehälften (3a, 3b).

## Claims

1. A locking device for a motor vehicle, comprising an actuating drive or an actuator (1, 210) having at least one electrically movable latch (5, 104, 211) for locking a first component which comprises a first casing wall (207), namely a charging socket of an electric vehicle, comprising a second component (201) which comprises a second casing wall (209), namely a charging plug for an electric vehicle, wherein the second casing wall is slid into an opening of the first casing wall, wherein the actuating drive (1, 210) is mounted with the latch (5, 104, 211) on the casing wall (207) of the first component, wherein the latch (5, 104, 211) can be slid by the actuating drive through a hole in the first casing wall, namely into a hole or into a recess in the second casing wall for the locking operation, wherein the actuating drive includes a lever (102, 119), by means of which the latch (5, 104, 211) can be manually actuated and mechanically moved out of its locking position into its unlocked starting position, **characterized in that** the actuating drive comprises a pivoted lever (102, 119), by means of which the latch can be manually actuated and mechanically moved out of its locking position by a rotary motion, that the latch (5, 104, 211) is connected to a ramp (12), by means of which a sensor (11) can be actuated, wherein a catch, in particular a snap-in lug (122) is provided for locking the latch (5, 104, 211) in the starting position and the locking position thereof, as well as comprising an elastic constriction (117a) and a bolt (118) of the latch (5, 104, 211) which will be moved through the constriction (117a), if the latch (5, 104, 211) is displaced from the starting position into the locking position or vice versa, comprising a sleeve gasket (7) which rests on the housing (3a, 3b) of the actuating drive (1) as well as on the latch (5, 104, 211), wherein the housing (3a, 3b) of the actuating drive (1, 210) is furthermore closed in a dust- and moisture-tight manner, wherein the sleeve gasket (7) is pressed against the wall of the second component, through which the latch (5, 104, 211) passes through in its locking position, wherein the space of the second component into which the latch (5) extends in its locking position is closed in a dust- and moisture-tight manner or is adapted to be closed in a dust- and moisture-tight manner.

2. A locking device according to claim 1, in which the rotatable lever (102, 119) comprises a hand grip element or an eyelet (150) which is provided outside the housing (103) of the actuating drive (101).

3. A locking device according to one of the preceding claims, in which an axis (120) connected to the rotatable lever (102, 119) at least comprises one circumferential sealing ring (121).

4. A locking device according to one of the preceding claims, in which the actuating drive (101) includes a sensor (116), by means of which the position of the latch (104) can be detected.

5. A locking device according to one of the preceding claims, in which the latch (105) is connected to an arm (115), by means of which the sensor (116) can be actuated.

6. A locking device according to one of the preceding claims, comprising a spindle (8), by means of which a rotary motion of the electric motor (9) can be converted into a linear movement of the latch (5).

7. A method for the manufacture of an actuating drive (1) according to one of the preceding claims 1 through 6, comprising the following steps:
inserting a first sealing ring into a circumferential groove of a housing half or injecting a first sealing ring into a circumferential groove or notch (17) of a housing half (3a),
optionally inserting a membrane (3c) into an opening of a housing half (3a),
optionally inserting a micro-switch (116) which is soldered and/or sealed, wherein the micro-switch (116) is electrically connected to conductor tracks which extend in the housing (3a, 3b), wherein the conductor tracks lead to the connecting socket (2) of the housing (3a, 3b),
inserting a motor (9) of the actuating drive into one housing half (3b), wherein the motor comprises a drive spindle or a driving toothed wheel,
optionally installing a spring cassette, wherein the installation of the spring cassette comprises the steps of:
• preloading the spring of the spring cassette and
• inserting the spring cassette with the preloaded spring,
connecting a spindle (8) to a frame (111) along with a latch (104), inserting the spindle (8) with drive wheel or toothed wheel mounted thereon, which can be driven by the drive spindle or by the toothed wheel of the motor (9), together with the frame (111) and the latch (104),
inserting a sealing ring (126) into the inner side of a sleeve gasket (107) as well as inserting a sealing ring (127), which is designed as a flat seal, into the inner side of the sleeve gasket (107),
gluing a sealing ring (108) on the outer side of the sleeve gasket (107);
inserting an inner lever (119) with an axis (120) connected thereto from inside into a housing half (3a);
optionally placing a sealing ring (121) onto the axis (120) of the inner lever;
placing an outer lever (102) onto the axis and connecting the outer lever to this one, in particular by means of form fit and snap-in mechanism ;
assembling both housing halves (3a, 3b);
attaching the sleeve gasket (107) with the arranged sealing rings (126, 127, 108) on the latch (104);
screwing both housing halves (3a, 3b) together.

## Revendications

1. Dispositif de verrouillage pour véhicule à moteur, comprenant un dispositif d'actionnement ou un actionneur (1, 210) ayant au moins un verrou (5, 104, 211) déplaçable électriquement pour verrouiller un premier composant, qui comprend une première paroi de boîtier (207), à savoir une prise de charge d'un véhicule électrique, comprenant un deuxième composant (201) qui comprend une deuxième paroi de boîtier (209), à savoir un connecteur de charge pour un véhicule électrique, la deuxième paroi de boîtier étant poussée dans une ouverture de la première paroi de boîtier, le dispositif d'actionnement (1, 210) étant monté avec le verrou (5, 104, 211) sur la paroi de boîtier (207 du premier composant, le verrou (5, 104, 211) pouvant être poussé par le dispositif d'actionnement à travers un trou dans la première paroi de boîtier, à savoir dans un trou ou dans un évidement dans la deuxième paroi de boîtier pour effectuer le verrouillage, le dispositif d'actionnement comprenant un levier (102, 119), par moyen duquel le verrou (5, 104, 211) peut être manuellement actionné et mécaniquement déplacé hors de sa position verrouillant vers sa position de départ non-verrouillant, **caractérisé en ce que** le dispositif d'actionnement comprend un levier (102, 119) monté de manière rotative, par moyen duquel le verrou (5, 104, 211) peut être manuellement actionné et mécaniquement déplacé hors de sa position verrouillant par un mouvement de rotation, que le verrou (5, 104, 211) est relié à une rampe (12), par moyen de laquelle un capteur (11) peut être actionné, un loquet, notamment un taquet d'arrêt (122) étant prévu pour bloquer le verrou (5, 104, 211) dans sa position de départ et dans sa position verrouillant ainsi que comprenant une constriction (117a) et un boulon (118) du verrou (5, 104, 211) qui sera déplacé à travers la constriction (117a), si le verrou (5, 104, 211) passe de la position de départ dans la position verrouillant ou vice versa, comprenant une manchette d'étanchéité (7) qui est en appui contre le boîtier (3a, 3b) du dispositif d'actionnement (1) ainsi que contre le verrou (5, 104, 211), le boîtier (3a, 3b) du dispositif d'actionnement (1, 210) étant en outre fermé de manière étanche à la poussière et à l'humidité, la manchette d'étanchéité (7) étant pressée contre la paroi du deuxième composant, à travers laquelle s'étend le verrou (5, 104, 211) dans sa position verrouillant, l'espace du deuxième composant, dans lequel s'étend le verrou (5) dans sa position verrouillant, étant fermé de manière étanche à la poussière et à l'humidité ou étant adapté à être fermé de manière étanche à la poussière et à l'humidité.

2. Dispositif de verrouillage selon la revendication 1, dans lequel le levier rotatif (102, 119) comprend un élément de poignée ou un oeillet (105) qui se trouve à l'extérieur du boîtier (103) du dispositif d'actionnement (101).

3. Dispositif de verrouillage selon l'une des revendications précédentes, dans lequel un axe (120) relié au levier rotatif (102, 119) comprend au moins une bague d'étanchéité circonférentielle (121).

4. Dispositif de verrouillage selon l'une des revendications précédentes, dans lequel le dispositif d'actionnement (101) comprend un capteur (116), par moyen duquel il est possible de détecter la position du verrou (104).

5. Dispositif de verrouillage selon l'une des revendications précédentes, dans lequel le verrou (105) est relié à un bras (115), par moyen duquel il est possible d'actionner le capteur (116).

6. Dispositif de verrouillage selon l'une des revendications précédentes, comprenant une broche (8), par moyen de laquelle un mouvement de rotation du moteur électrique (9) peut être converti en un mouvement linéaire du verrou (5).

7. Procédé de fabrication d'un dispositif d'actionnement (1) selon l'une des revendications précédentes 1 à 6, comprenant les étapes suivantes de :
insérer une première bague d'étanchéité dans une rainure circonférentielle d'une moitié de boîtier ou injecter une première bague d'étanchéité dans une rainure ou gorge circonférentielle (17) d'une moitié de boîtier (3a),
insérer facultativement une membrane (3c) dans une ouverture d'une moitié de boîtier (3a),
insérer facultativement un micro-interrupteur (116) qui est brasé et/ou scellé, le micro-interrupteur (116) étant relié électriquement à des pistes conductrices, qui se trouvent dans le boîtier (3a, 3b), les pistes conductrices menant à la prise de raccordement (2) du boîtier (3a, 3b).
insérer un moteur (9) du dispositif d'actionnement dans une moitié de boîtier (3b), le moteur comprenant une broche d'entraînement ou une roue dentée d'entraînement,
installer facultativement une cassette à ressort, l'installation de la cassette à ressort comprenant les étapes de :
• précontraindre le ressort de la cassette à ressort et
• insérer la cassette à ressort avec le ressort précontraint.
relier une broche (8) à un cadre (111) avec un verrou (104), insérer la broche (8) avec la roue d'entraînement ou la roue dentée montée sur celle-ci, laquelle roue peut être entraînée par la broche d'entraînement ou par la roue dentée du moteur (9), avec le cadre (111) et le verrou (104),
insérer une bague d'étanchéité (126) dans le côté intérieur d'une manchette d'étanchéité (107) ainsi que insérer une bague d'étanchéité (127) configurée comme un joint plat, dans le côté intérieur de la manchette d'étanchéité (107),
coller une bague d'étanchéité (108) sur le côté extérieur de la manchette d'étanchéité (107) ;
insérer un levier intérieur (119) avec un axe (120) relié à celui-ci à partir de l'intérieur dans une moitié de boîtier (3a) ;
placer facultativement une bague d'étanchéité (121) sur l'axe (120) du levier intérieur ;
placer un levier extérieur (102) sur l'axe et relier le levier extérieur à celui-ci, notamment par moyen de complémentarité de forme et par moyen d'un mécanisme d'encliquetage ;
assembler les deux moitiés de boîtier (3a, 3b) ;
fixer la manchette d'étanchéité (107) avec les bagues d'étanchéité (126, 127, 108) montées sur celle-ci sur le verrou (104) ;
visser les deux moitiés de boîtier (3a, 3b) l'une à l'autre.
